# EUROPEAN PATENT SPECIFICATION

(11) **EP 3 846 448 B1**
(45) Date of publication and mention of the grant of the patent: **18.03.2026**
(21) Application number: 19854941.2
(22) Date of filing: 28.08.2019
(51) Int. Cl.: G06F 18/2413, G06N 3/063, G06N 3/084, G06V 10/10, G06V 10/44, G06V 10/764, G06V 10/94, H04N 13/239, H04N 23/10, H04N 23/60, H04N 23/74, H04N 25/76, H04N 25/00, G06N 3/0464, G06N 3/0475, G06N 3/082, G06N 3/09

(54) **SOLID-STATE IMAGE CAPTURE DEVICE, INFORMATION PROCESSING DEVICE, INFORMATION PROCESSING SYSTEM, INFORMATION PROCESSING METHOD, AND PROGRAM**
FESTKÖRPER-BILDAUFNAHMEVORRICHTUNG, INFORMATIONSVERARBEITUNGSVORRICHTUNG, INFORMATIONSVERARBEITUNGSSYSTEM, INFORMATIONSVERARBEITUNGSVERFAHREN UND PROGRAMM
DISPOSITIF DE CAPTURE D'IMAGE À SEMI-CONDUCTEUR, DISPOSITIF DE TRAITEMENT D'INFORMATIONS, SYSTÈME DE TRAITEMENT D'INFORMATIONS, PROCÉDÉ DE TRAITEMENT D'INFORMATIONS ET PROGRAMME

(30) Priority: 31.08.2018 JP 2018164001
(43) Date of publication of application: 07.07.2021
(73) Proprietor: Sony Semiconductor Solutions Corporation, Atsugi-shi, Kanagawa 243-0014 (JP)
(72) Inventor: HANADA, Seigo, Atsugi-shi, Kanagawa 243-0014 (JP)
(74) Representative: Müller Hoffmann & Partner
(86) International application number: PCT/JP2019/033814
(87) International publication number: WO 2020/045539

(56) References cited:
- WO-A1-2017/154284
- WO-A1-2018/142766
- JP-A- 2018 107 759
- JP-A- 2018 510 399
- JP-A- 2018 516 412
- MUKHOPODHYAY SAIBAL ET AL: "The CAMEL approach to stacked sensor smart cameras", 2018 DESIGN, AUTOMATION & TEST IN EUROPE CONFERENCE & EXHIBITION (DATE), EDAA, 19 March 2018 (2018-03-19), pages 1299 - 1303, XP033334058, DOI: 10.23919/DATE.2018.8342214
- AMIR MOHAMMAD FAISAL ET AL: "3-D Stacked Image Sensor With Deep Neural Network Computation", IEEE SENSORS JOURNAL, IEEE SERVICE CENTER, NEW YORK, NY, US, vol. 18, no. 10, 15 May 2018 (2018-05-15), pages 4187 - 4199, XP011681876, ISSN: 1530-437X, [retrieved on 20180423], DOI: 10.1109/JSEN.2018.2817632
- KO JONG HWAN ET AL: "Energy-efficient neural image processing for Internet-of-Things edge devices", 2017 IEEE 60TH INTERNATIONAL MIDWEST SYMPOSIUM ON CIRCUITS AND SYSTEMS (MWSCAS), IEEE, 6 August 2017 (2017-08-06), pages 1069 - 1072, XP033158212, DOI: 10.1109/MWSCAS.2017.8053112
- JAEHA KUNG ET AL: "Dynamic Approximation with Feedback Control for Energy-Efficient Recurrent Neural Network Hardware", LOW POWER ELECTRONICS AND DESIGN, ACM, 2 PENN PLAZA, SUITE 701 NEW YORK NY 10121-0701 USA, 8 August 2016 (2016-08-08), pages 168 - 173, XP058276478, ISBN: 978-1-4503-4185-1, DOI: 10.1145/2934583.2934626
- PENG GUAN ET AL: "Minimizing Distribution Cost of Distributed Neural Networks in Wireless Sensor Networks", GLOBAL TELECOMMUNICATIONS CONFERENCE, 2007. GLOBECOM '07. IEEE, IEEE, PISCATAWAY, NJ, USA, 1 November 2007 (2007-11-01), pages 790 - 794, XP031196081, ISBN: 978-1-4244-1042-2

## Description

### Field

The present invention relates to a solid-state image capturing device, an information processing device, an information processing system and an information processing method.

### Background

Recently, various kinds of devices on which a neural network is implemented have been disclosed. For example, Patent Literature 1 discloses a technology of searching for a network structure of higher performance based on an evaluation result of an acquired network structure.
MUKHOPODHYAY SAIBAL ET AL, "The CAMEL approach to stacked sensor smart cameras", 2018 DESIGN, AUTOMATION & TEST IN EUROPE CONFERENCE & EXHIBITION (DATE), EDAA, 19 March 2018 (2018-03-19), pages 1299 - 1303, XP033334058, DOI:10.23919/DATE.2018.8342214, relates to characteristics of a stacked image sensor system and describes algorithmic and system concepts provided by stacked sensors.
AMIR MOHAMMAD FAISAL ET AL, "3-D Stacked Image Sensor With Deep Neural Network Computation", IEEE SENSORS JOURNAL, IEEE SERVICE CENTER, NEW YORK, NY, US, vol. 18, no. 10, 15 May 2018 (2018-05-15), pages 4187 - 4199, XP011681876, ISSN 1530-437X, DOI:10.1109/JSEN.2018.2817632, relates to power and performance trade-offs associated with integrating deep neural network (DNN) computation in an image sensor. The design of a Neurosensor - a CMOS image sensor with 3-D stacking of pixel array, read-out circuits, memory, and computing logic for DNN is described.

KO JONG HWAN ET AL, "Energy-efficient neural image processing for Internet-of-Things edge devices", 2017 IEEE 60TH INTERNATIONAL MIDWEST SYMPOSIUM ON CIRCUITS AND SYSTEMS (MWSCAS), IEEE, 6 August 2017 (2017-08-06), pages 1069 - 1072, XP033158212, DOI:10.1109/MWSCAS.2017.8053112, relates to energy-efficient neural image processing.

### Citation List

### Patent Literature

Patent Literature 1: JP 2017-182710 A

### Summary

The invention is defined by the appended claims.

### Technical Problem

An image sensor including a complementary metal oxide semiconductor (CMOS) and a digital signal processor (DSP) is mounted on an instrument such as a digital camera. Recently, for example, implementing the function of a deep neural network (DNN) on the image sensor and executing advanced processing to achieve diversification and speeding-up of image processing, protection of private information, and the like has been preferred.

Thus, the present disclosure provides a solid-state image capturing device, an information processing device, an information processing system, an information processing method, and a computer program that are capable of changing a DNN model to be executed.

### Solution to Problem

To solve the problem described above, a solid-state image capturing device is provided with the features of claim 1.

### Brief Description of Drawings

FIG. 1 is a block diagram illustrating an exemplary configuration of a solid-state image capturing system according to a first embodiment of the present disclosure.
FIG. 2 is a schematic diagram for description of an exemplary connection relation of the solid-state image capturing system according to the first embodiment of the present disclosure.
FIG. 3 is a schematic diagram illustrating an exemplary laminated structure of a solid-state image capturing device according to the first embodiment of the present disclosure.
FIG. 4 is a diagram for description of exemplary object sensing processing.
FIG. 5 is a sequence diagram illustrating an exemplary process of processing at the solid-state image capturing system according to the first embodiment of the present disclosure.
FIG. 6 is a flowchart illustrating an exemplary process of learning processing at the solid-state image capturing device according to the first embodiment of the present disclosure.
FIG. 7 is a flowchart illustrating an exemplary process of learning processing at the solid-state image capturing device according to the first embodiment of the present disclosure.
FIG. 8 is a schematic diagram for description of processing on image data according to the first embodiment of the present disclosure.
FIG. 9 is a diagram illustrating an exemplary use case of the solid-state image capturing system according to the first embodiment of the present disclosure.
FIG. 10 is a block diagram illustrating an exemplary configuration of a solid-state image capturing system according to a modification of the first embodiment of the present disclosure.
FIG. 11 is a block diagram illustrating an exemplary configuration of a solid-state image capturing system according to a second embodiment of the present disclosure.
FIG. 12 is a schematic diagram for description of an exemplary connection relation of the solid-state image capturing system according to the second embodiment of the present disclosure.
FIG. 13 is a schematic diagram for description of an exemplary connection relation of the solid-state image capturing system according to the second embodiment of the present disclosure.
FIG. 14 is a block diagram illustrating an exemplary configuration of a solid-state image capturing system according to a third embodiment of the present disclosure.
FIG. 15 is a schematic diagram for description of an exemplary connection relation of the solid-state image capturing system according to the third embodiment of the present disclosure.
FIG. 16 is a hardware configuration diagram illustrating an exemplary computer configured to achieve functions of a solid-state image capturing device and an information processing device of the present disclosure.
FIG. 17 is a diagram illustrating an exemplary schematic configuration of an endoscope operation system.
FIG. 18 is a block diagram illustrating exemplary functional configurations of a camera head and a CCU.
FIG. 19 is a block diagram illustrating an exemplary schematic configuration of a diagnosis support system.
FIG. 20 is a block diagram illustrating an exemplary schematic configuration of a vehicle control system.
FIG. 21 is an explanatory diagram illustrating exemplary installation positions of an external information detection unit and image capturing units.

### Description of Embodiments

Embodiments of the present disclosure will be described below in detail with reference to the accompanying drawings. Identical sites in the embodiments below are denoted by an identical reference sign, and duplicate description thereof is omitted.

The present disclosure will be described in accordance with a content order described below.
1. First embodiment
   1-1. Configuration of solid-state image capturing system according to first embodiment
   1-2. Processing at solid-state image capturing system according to first embodiment
   1-3. Use Case of solid-state image capturing system according to first embodiment
   1-4. Modification of solid-state image capturing system according to first embodiment
2. Second embodiment
   2-1. Configuration of solid-state image capturing system according to second embodiment
   2-2. Configuration of modification of solid-state image capturing system according to second embodiment
3. Third embodiment
   3-1. Configuration of solid-state image capturing system according to third embodiment
4. Hardware configuration
5. Exemplary application to endoscope operation system
6. Exemplary application 1
7. Exemplary application to moving object

### (1. First embodiment)

### [1-1. Configuration of solid-state image capturing system according to first embodiment]

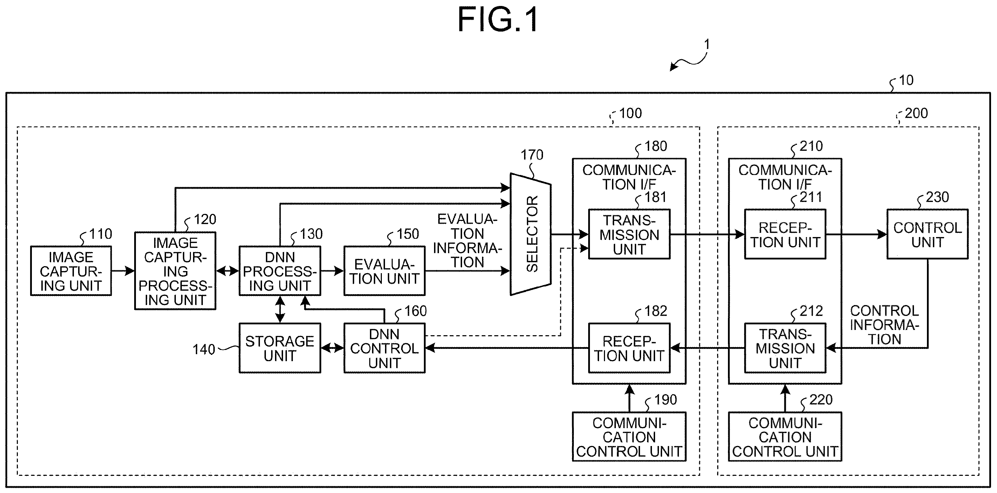

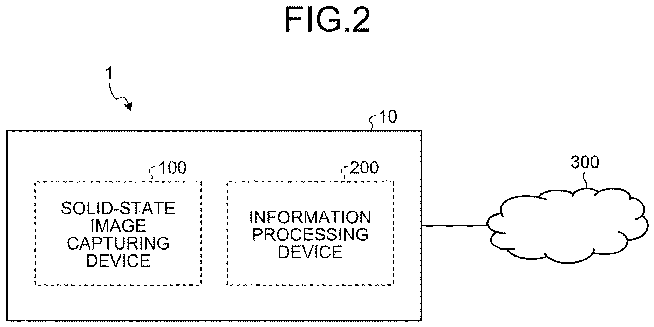

The following describes the configuration of solid-state image capturing system according to a first embodiment of the present disclosure with reference to FIGS. 1 and 2. FIG. 1 is a block diagram illustrating an exemplary configuration of the solid-state image capturing system according to the first embodiment of the present disclosure. FIG. 2 is a diagram for description of a connection relation of the solid-state image capturing system according to the first embodiment of the present disclosure.

As illustrated in FIG. 1, this solid-state image capturing system 1 includes a solid-state image capturing device 100 and an information processing device 200.

As illustrated in FIG. 2, the solid-state image capturing device 100 and the information processing device 200 are provided in an identical housing 10. Specifically, the solid-state image capturing device 100 and the information processing device 200 are provided as different chips in the identical housing 10. The solid-state image capturing device 100 and the information processing device 200 are each mounted as a system-on-a-chip (SoC), a multi-chip module (MCM), a system in a package (SIP), a small outline package (SOP), or the like. The solid-state image capturing system 1 may be connected with an external device through, for example, an internet communication network 300 to perform communication therebetween. In this case, the solid-state image capturing system 1 may be connected with the external device through, for example, wireless communication to perform communication therebetween. The solid-state image capturing system 1 is applicable to, for example, a virtual personal assistant (VPA) or an on-board camera.

As illustrated in FIG. 1, the solid-state image capturing device 100 includes an image capturing unit 110, an image capturing processing unit 120, a DNN processing unit 130, a storage unit 140, an evaluation unit 150, a DNN control unit 160, a selector 170, a communication I/F 180, and a communication control unit 190.

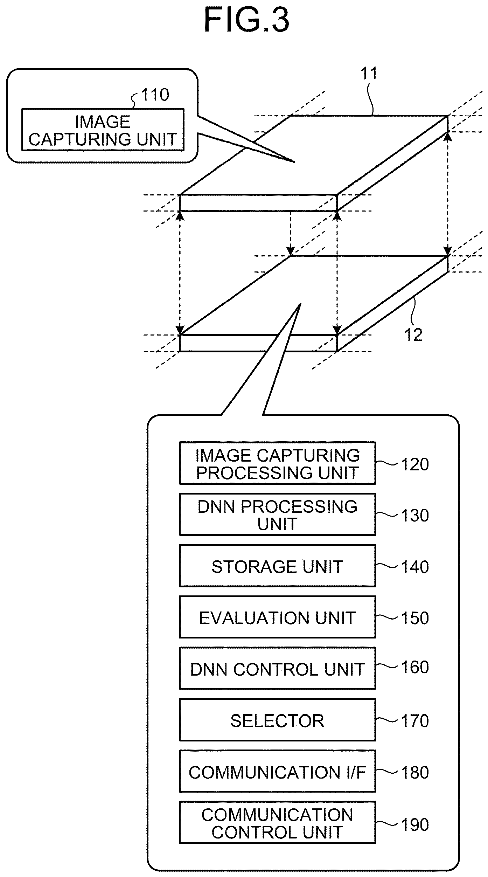

FIG. 3 is a schematic diagram illustrating an exemplary laminated structure of the solid-state image capturing device 100 according to the first embodiment. As illustrated in FIG. 3, the solid-state image capturing device 100 has, for example, a laminated structure in which a first substrate 11 of a rectangular shape and a second substrate 12 of a rectangular shape are bonded to each other.

The first substrate 11 and the second substrate 12 may be bonded to each other by, for example, what is called a chip-on-chip (CoC) scheme in which the first substrate 11 and the second substrate 12 are diced into chips and then the diced first substrate 11 and second substrate 12 are bonded to each other. Alternatively, the first substrate 11 and the second substrate 12 may be bonded to each other by what is called a chip-on-wafer (CoW) scheme in which one (for example, the first substrate 11) of the first substrate 11 and the second substrate 12 is diced into a chip and then the diced first substrate 11 is bonded to the second substrate 12 yet to be diced (in other words, in a wafer state). Alternatively, the first substrate 11 and the second substrate 12 may be bonded to each other in a wafer state by what is called a wafer-on-wafer (WoW) scheme.

The first substrate 11 and the second substrate 12 may be joined together by, for example, plasma joining. However, the present disclosure is not limited thereto, and various kinds of joining methods may be used.

The sizes of the first substrate 11 and the second substrate 12 may be same or different. The first substrate 11 and the second substrate 12 are semiconductor substrates such as silicon substrates.

Among the components of the solid-state image capturing device 100 illustrated in FIG. 1, for example, the image capturing unit 110 is disposed on the first substrate 11.

Among the components of the solid-state image capturing device 100 illustrated in FIG. 1, for example, the image capturing processing unit 120, the DNN processing unit 130, the storage unit 140, the evaluation unit 150, the DNN control unit 160, the selector 170, the communication I/F 180, and the communication control unit 190 are disposed on the second substrate 12.

Accordingly, the image capturing unit 110 of the solid-state image capturing device 100 is stacked and mounted on the components other than the image capturing unit 110.

FIG. 1 is referred to again. The image capturing unit 110 includes, for example, an optical system including a zoom lens, a focus lens, and an aperture, and a pixel array unit having a configuration in which unit pixels each including a light receiving element such as a photodiode are arrayed in a two-dimensional matrix. Light incident from the outside is imaged, through the optical system, on a light-receiving surface on which the light receiving elements are arrayed in the pixel array unit. Each unit pixel of the pixel array unit photoelectrically converts light incident on the light receiving element and generates image data in accordance with the light quantity of the incident light. The image capturing unit 110 outputs the image data thus captured to the image capturing processing unit 120.

For example, the image capturing processing unit 120 converts the image data into digital image data. For example, the image capturing processing unit 120 executes "preprocessing", "data extension", and "data normalization" on the converted digital image data. The preprocessing is processing executed on the image capturing unit 110 at inference and learning and includes processing such as dewarping, cropping, lens shading correction, downscaling, and upscaling. The data extension is processing executed on the image data at learning and includes, for example, processing of changing the aspect ratio of the image data, translating the image data, rotating the image data, inverting the image data, and geometrically deforming the image data. The data extension includes, for example, processing of changing the grayscale of the color of the image data and varying the color. The data extension also includes, for example, processing of adding noise to the image data. The data normalization is processing executed on the image data at inference and learning and includes, for example, processing of setting the average of the pixel values of the image data to be zero, setting dispersion of the pixel values to one, and setting correlation between components to be zero to whiten the image data. The image capturing processing unit 120 outputs the digital image data on which various kinds of processing are executed to the DNN processing unit 130 and the selector 170.

The DNN processing unit 130 executes processing of recognizing an object included in the image data input from the image capturing processing unit 120 by executing a DNN for the image data based on a DNN model stored in the storage unit 140. Specifically, the DNN processing unit 130 executes, on the image data received from the image capturing processing unit 120, processing of sensing an object included in the image data. The DNN processing unit 130 outputs a result of the execution of a DNN for the image data to the evaluation unit 150. The DNN processing unit 130 may be achieved by, for example, a DSP. In other words, the DNN processing unit 130 may be achieved by providing the DSP with a function to execute a DNN. The solid-state image capturing device 100 may include only one DNN processing unit 130 or may include a plurality of DNN processing units 130.

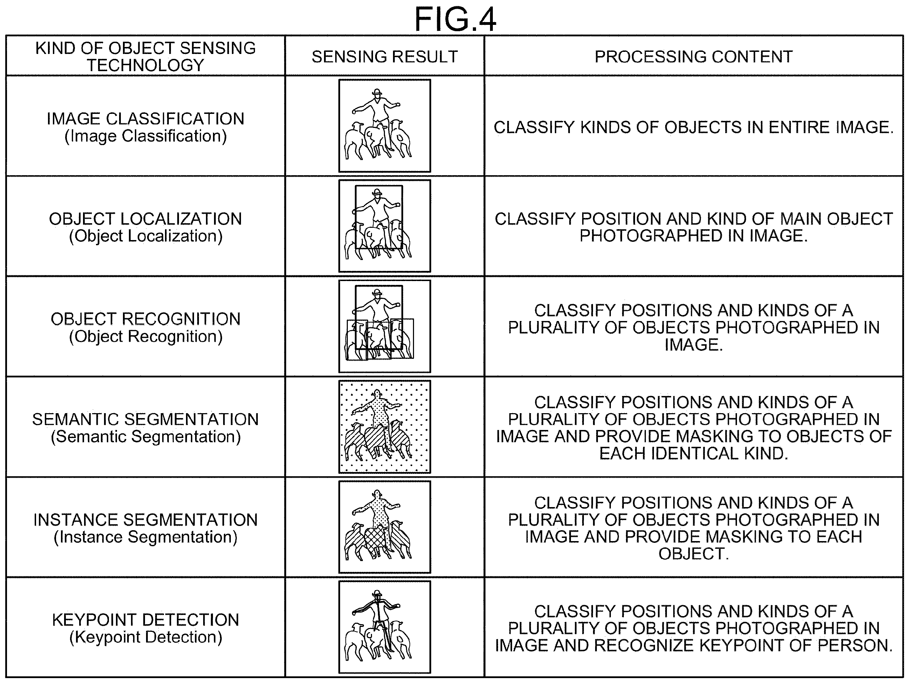

The following describes exemplary object sensing processing executed by the DNN processing unit 130 with reference to FIG. 4. FIG. 4 is a diagram for description of the exemplary object sensing processing executed by the DNN processing unit 130. The object sensing processing illustrated in FIG. 4 is merely exemplary and does not limit the present disclosure.

As illustrated in FIG. 4, the DNN processing unit 130 executes, for example, image classification processing, object localization processing, object recognition processing, semantic segmentation, instance segmentation, and keypoint detection processing.

The image classification processing is processing of classifying the kind of an object included in the entire image data. For example, the image classification processing recognizes that persons and animals are included in the image data.

The object localization processing is processing of classifying the position and kind of a main object included in the image data. For example, the specification processing specifies the position of a person as a main object.

The object recognition processing is processing of classifying the positions and kinds of a plurality of objects included in the image data. For example, the object recognition processing classifies a person and an animal and recognizes the positions of the person and the animal.

The semantic segmentation is processing of classifying the positions and kinds of a plurality of objects included in the image data and providing an identical masking to objects of an identical kind. For example, the semantic segmentation provides different kinds of masking to a person and an animal. In this example, the same masking is provided to each animal.

The instance segmentation is processing of classifying the positions and kinds of a plurality of objects included in the image data and providing masking to each object. For example, the instance segmentation provides different kinds of masking to a person and an animal.

The keypoint detection processing is processing of classifying the positions and kinds of a plurality of objects included in the image data and detecting a keypoint of each object. For example, the keypoint detection processing detects a keypoint of a person.

FIG. 1 is referred to again. Specifically, the DNN processing unit 130 performs the object sensing processing by executing, for example, convolution, bias addition, activation calculation, and pooling processing on the image data received from the image capturing processing unit 120.

Examples of activation functions used in the activation calculation by the DNN processing unit 130 include an identity function, a sigmoid function, a soft max function, a step function, a ReLU function, and a Tanh function, but the present disclosure is not limited thereto.

The DNN processing unit 130 calculates, for example, an error and the value of a loss function at learning. The DNN processing unit 130 calculates an error of a target DNN model by using a method such as a gradient descent method, a stochastic gradient descent method, a Newton's method, a quasi-Newton's method, or an error backpropagation method. The DNN processing unit 130 calculates the value of the loss function by using a method such as a least square error or a cross entropy error.

For example, the storage unit 140 stores therein at least one DNN model to be executed by the DNN processing unit 130. The storage unit 140 may be achieved by a semiconductor memory element such as a random access memory (RAM), a read only memory (ROM), or a flash memory.

Examples of DNN models stored in the storage unit 140 include classification, object sensing, human body keypoint recognition, face detection, face identification, image generation (for example, generative adversarial network (GAN)), recurrent (for example, recurrent neural network (RNN)), and noise removal models. The above-described DNN kinds are merely exemplary and do not limit the present disclosure.

Each DNN model stored in the storage unit 140 is associated with identification information such as an ID. In other words, each DNN model is managed with the identification information and stored in the storage unit 140 so that a desired DNN model can be selected from the outside based on the identification information. Specifically, each DNN model stored in the storage unit 140 can be read from the outside and written with addition, change, and the like based on the identification information. The DNN model stored in the storage unit 140 may be associated with identification information of the solid-state image capturing device 100. Accordingly, when a plurality of solid-state image capturing devices 100 are provided, it is possible to determine in which device a DNN model is stored. The storage unit 140 may store therein one inference DNN model or more and may store therein one learning DNN model or more. Alternatively, the storage unit 140 may store therein an inference DNN model and one learning DNN model or more.

Each DNN model stored in the storage unit 140 is distinguished by model information. Model information include an input image size, a filter size, a filter value, a filter number, a stride number, a padding number, a bias value, the kind of an activation function, the accuracy of a DNN, the value of the loss function, a batch size, the kind of normalization, and a learning rate.

The input image size means the size of image data for which a DNN is executed, and is defined by the number of longitudinal pixels × the number of transverse pixels × a channel number. The channel number means the number of input images.

The filter size is a filter applied to an input image and defined by the number of longitudinal pixels × the number of transverse pixels × the channel number. The filter value is the weight of the filter and a value automatically set by learning. The feature amount of the input image is extracted by applying the filter to the input image. In this example, when normal convolution is executed for the input image, a characteristic map smaller than the input image size is generated. When transposed convolution is executed for the input image, a characteristic map larger than the input image size is generated.

The stride number means the moving amount of the filter when the filter is applied to the input image. The padding number means the size of a region at an edge of a characteristic map after the filter is applied. The bias value is a value input independently from the input image, and the bias value is automatically set by learning.

The kind of an activation function is, for example, an identity function, a sigmoid function, a soft max function, a step function, a ReLU function, or a Tanh function as described above.

The accuracy of a DNN is the accuracy of recognition of the input image and evaluated by the evaluation unit 150 in the present embodiment. The value of the loss function is a value calculated by the least square error, the cross entropy error, or the like. The batch size means the data sampling number of learning data. The learning rate means the learning count of a DNN model.

The storage unit 140 may also store, for example, learning data. The learning data is, for example, training data for training error calculation or test data for test error calculation. The storage unit 140 may store therein the learning data in advance or may store, as the learning data, image data captured by the image capturing unit 110 in a learning mode.

When storing, as the learning data, for example, image data captured by the image capturing unit 110, the storage unit 140 stores therein the image data as RAW data. In this case, the image data captured by the image capturing unit 110 is provided with "preprocessing", "data extension", and "data normalization" by the image capturing processing unit 120 before learning. When storing therein the image data not as RAW data, as well, the storage unit 140 may provide "preprocessing", "data extension", and "data normalization" in advance.

The evaluation unit 150 generates evaluation information by evaluating the processing situation of the DNN processing unit 130 based on, for example, a result of DNN execution by the DNN processing unit 130. At inference, the evaluation unit 150 generates the evaluation information by measuring, for example, the consumption of electric power used when the DNN processing unit 130 executes a DNN, or the recognition accuracy of the DNN. To determine the accuracy of the DNN, the evaluation information preferably includes information related to the recognition accuracy of the DNN. At learning, the evaluation unit 150 generates the evaluation information by measuring, for example, the recognition accuracy of the DNN or the value of the loss function. The evaluation unit 150 may generate the evaluation information by evaluating the processing situation of the solid-state image capturing device 100 including the DNN processing unit 130. The evaluation unit 150 transmits at least part of the evaluation information to the information processing device 200. The evaluation information includes the model information of a DNN model, the identification information of the DNN model, the identification information of the solid-state image capturing device 100, the electric power consumption of each component, the operation frequency of each component, a frame rate, and the number of classifications including the number of class classifications and the number of sensed objects (the number of regions of interest (ROI)).

The DNN control unit 160 acquires control information from a control unit 230 of the information processing device 200. The DNN control unit 160 changes, based on the control information, parameters of a DNN model stored in the storage unit 140. Accordingly, the DNN control unit 160 changes the DNN model stored in the storage unit 140 to another different DNN model. Specifically, for example, the DNN control unit 160 searches for a DNN model based on the identification information of the DNN model and the identification information of the solid-state image capturing device 100 and reads the DNN model. Then, for example, the DNN control unit 160 writes addition, change, and the like to the DNN model based on the control information. In addition, for example, the DNN control unit 160 newly produces a DNN model and deletes a DNN model stored in the storage unit 140 based on the control information. For example, the DNN control unit 160 may transmit a notification that change of the DNN model is completed to the information processing device 200.

Specifically, the DNN control unit 160 executes normalization, drop-out, momentum, weight initialization, and the like on the DNN model. The normalization is processing of restricting the degree of freedom of weight to prevent overlearning at learning. The drop-out is processing of selecting a unit of a multi-layer network at a predetermined probability and updating a weight at learning. The momentum is processing of adding, when a correction amount of a weight count is calculated to improve convergence performance of the gradient descent method, a constant multiple of the previous correction amount at learning. The weight initialization is processing of setting an initial value to a random value given by a Gaussian distribution.

More specifically, the DNN control unit 160 preferably changes at least one of the input image size and the filter size of a DNN model stored in the storage unit 140. Accordingly, the DNN can be executed for various kinds of image data.

For example, the DNN control unit 160 changes the number of classifications of a DNN model stored in the storage unit 140 by controlling the DNN processing unit 130 based on the control information. For example, when an initially stored DNN model is based on an assumption that the DNN is executed for indoor image data and the number of classifications is relatively small, the DNN model can be changed to a DNN model that can be applied to outdoor image data by increasing the number of classifications.

For example, the DNN control unit 160 changes the electric power consumption of a DNN model stored in the storage unit 140 based on the control information. For example, when the DNN processing unit 130 excessively consumes electrical power by executing the DNN model, the electric power consumption can be reduced by changing the DNN model to a DNN model having small electric power consumption.

For example, the DNN control unit 160 changes the recognition accuracy of a DNN model stored in the storage unit 140 based on the control information. For example, when the recognition accuracy is low as a result of executing the DNN model by the DNN processing unit 130, the DNN model is changed to a DNN model of a high recognition accuracy. Accordingly, the accuracy of object recognition can be improved. When the recognition accuracy is higher than needed, the DNN model is changed to a DNN model of a low recognition accuracy. Accordingly, it is possible to improve the calculation speed and reduce the electric power consumption.

The DNN control unit 160 switches an executed DNN model to a DNN model stored in the storage unit 140 based on the control information. Accordingly, the DNN model stored in the storage unit 140 is used without newly producing a DNN model, and thus DNN model change can be easily performed. As a result, it is possible to easily obtain an execution result of a different DNN.

For example, the selector 170 receives digital image data provided with various kinds of processing from the image capturing processing unit 120. For example, the selector 170 receives a DNN execution result from the DNN processing unit 130. For example, the selector 170 receives evaluation information from the evaluation unit 150. For example, the selector 170 selectively outputs data received from the image capturing processing unit 120, the DNN processing unit 130, or the evaluation unit 150 to the communication I/F 180 in accordance with a control signal from a control unit (not illustrated) of the selector.

The communication I/F 180 includes a transmission unit 181 and a reception unit 182. Data from the solid-state image capturing device 100 is transmitted to the information processing device 200 through the transmission unit 181. Data from the information processing device 200 is input to the solid-state image capturing device 100 through the reception unit 182.

The communication control unit 190 controls the communication I/F 180. Accordingly, the communication I/F 180 transmits data to the information processing device 200 and receives data from the information processing device 200. For example, the communication control unit 190 may encrypt data. When performing encryption, the communication control unit 190 may use common key encryption such as data encryption standard (DES) or advanced encryption standard (AES). The communication control unit may use encryption modes such as electronic codebook (ECB), cipher block chaining (CBC), cipher feedback (CFB), output feedback (OFB), and counter (CTR).

The information processing device 200 includes a communication I/F 210, a communication control unit 220, and the control unit 230. In the first embodiment, the information processing device 200 may be achieved by, for example, an application processor.

The communication I/F 210 includes a reception unit 211 and a transmission unit 212. Data from the solid-state image capturing device 100 is input to the control unit 230 through the reception unit 211. Data from the information processing device 200 is transmitted to the solid-state image capturing device 100 through the transmission unit 212.

The communication control unit 220 controls the communication I/F 210. Accordingly, the communication I/F 210 transmits data to the information processing device 200 and receives data from the information processing device 200. For example, the communication control unit 220 may encrypt data and communicate the data with the solid-state image capturing device 100. When performing encryption, the communication control unit 220 may use common key encryption such as the DES or the AES. The communication control unit 220 may use encryption modes such as the ECB, the CBC, the CFB, the OFB, and the CTR.

For example, the control unit 230 acquires, from the solid-state image capturing device 100 through the communication I/F 210, evaluation information generated by the evaluation unit 150. The control unit 230 generates, based on the evaluation information, control information for changing a DNN model. For example, the control unit 230 transmits the control information to the solid-state image capturing device 100 to cause the solid-state image capturing device 100 to execute another DNN model. Specifically, for example, the control unit 230 transmits the control information to the solid-state image capturing device 100 to change the number of classifications, the recognition accuracy, and the electric power consumption of the DNN model. Accordingly, an optimum DNN can be executed in accordance with environment around the solid-state image capturing device 100. The control information includes information for change, which is related to the model information of the DNN model, the identification information of the DNN model, the identification information of the solid-state image capturing device 100, the electric power consumption, the operation frequency, the frame rate, and the number of classifications.

For example, the control unit 230 preferably acquires information related to a DNN model stored in the storage unit 140 of the solid-state image capturing device 100. Accordingly, the control unit 230 can generate control information based on the DNN model stored in the storage unit 140 of the solid-state image capturing device 100. As a result, the solid-state image capturing device 100 can efficiently change the DNN model.

### [1-2. Processing at solid-state image capturing system according to first embodiment]

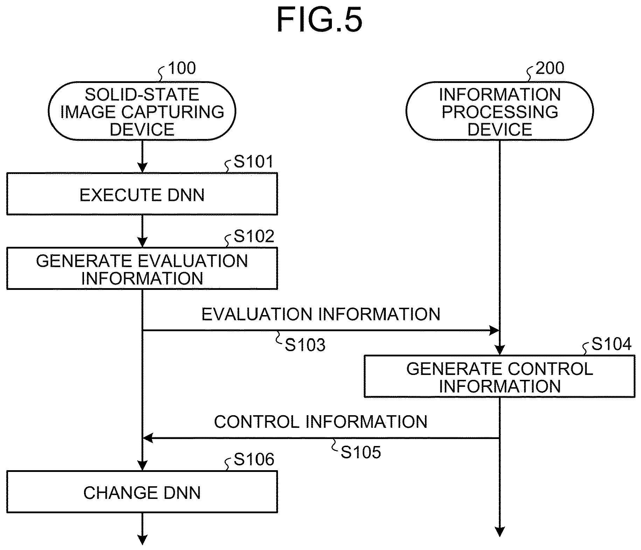

The following describes processing at the solid-state image capturing device 100 and the information processing device 200 with reference to FIG. 5. FIG. 5 is a sequence diagram illustrating the process of the processing at the solid-state image capturing device 100 and the information processing device 200.

First, the solid-state image capturing device 100 executes a DNN for an input image (step S101). Specifically, the solid-state image capturing device 100 causes the DNN processing unit 130 to read a DNN model from the storage unit 140 and execute a DNN for the input image.

Subsequently, the solid-state image capturing device 100 generates evaluation information of the DNN (step S102). Specifically, the solid-state image capturing device 100 causes the evaluation unit 150 to generate the evaluation information.

Subsequently the solid-state image capturing device 100 transmits the evaluation information to the information processing device 200 (step S103). Specifically, the solid-state image capturing device 100 causes the evaluation unit 150 to transmit the evaluation information to the information processing device 200 through the communication I/F 180.

Subsequently, the information processing device 200 generates control information (step S104). Specifically, the information processing device 200 causes the control unit 230 to generate control information based on the evaluation information.

Subsequently, the information processing device 200 transmits the control information to the solid-state image capturing device 100 (step S105).

Subsequently, the solid-state image capturing device 100 changes the DNN (step S106). Specifically, the solid-state image capturing device 100 causes the DNN control unit 160 to change the DNN model stored in the storage unit 140.

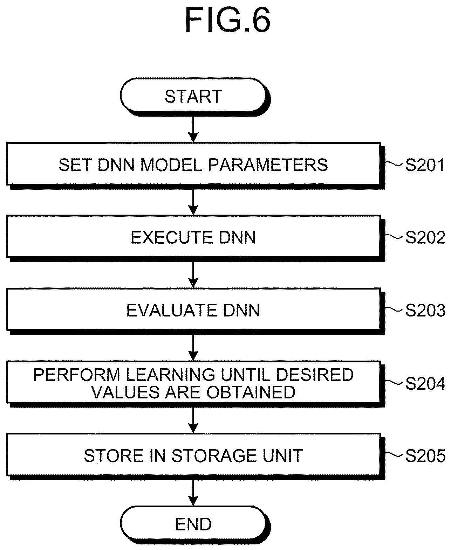

The following describes learning operation using a DNN with reference to FIG. 6. FIG. 6 is a flowchart illustrating the process of learning processing using data stored in the storage unit in advance and using a DNN based on a control signal.

First, the solid-state image capturing device 100 sets parameters of a DNN model (step S201). Specifically, the solid-state image capturing device 100 causes, based on a control signal from the information processing device 200, the DNN control unit 160 to control the DNN processing unit 130 to set parameters of a DNN model stored in the storage unit 140.

Subsequently, the solid-state image capturing device 100 executes a DNN (step S202). Specifically, the solid-state image capturing device 100 causes the DNN processing unit 130 to execute a DNN model based on the DNN model having the parameters changed at step S201.

Subsequently, the solid-state image capturing device 100 evaluates the DNN executed at step S202 (step S203). Specifically, the solid-state image capturing device 100 causes the evaluation unit 150 to calculate the values of the loss function and the accuracy of the DNN.

Subsequently, the solid-state image capturing device 100 performs learning until the values of the loss function and the accuracy of the DNN reach desired values (step S204). Specifically, the solid-state image capturing device 100 causes, based on a control signal, the DNN processing unit 130 to perform learning until the values of the loss function and the accuracy of the DNN reach desired values.

Subsequently, the solid-state image capturing device 100 stores the DNN model for which the desired values are reached in the storage unit 140 (step S205). Specifically, the solid-state image capturing device 100 causes the DNN control unit 160 to control the DNN processing unit 130 to store the DNN model in the storage unit 140.

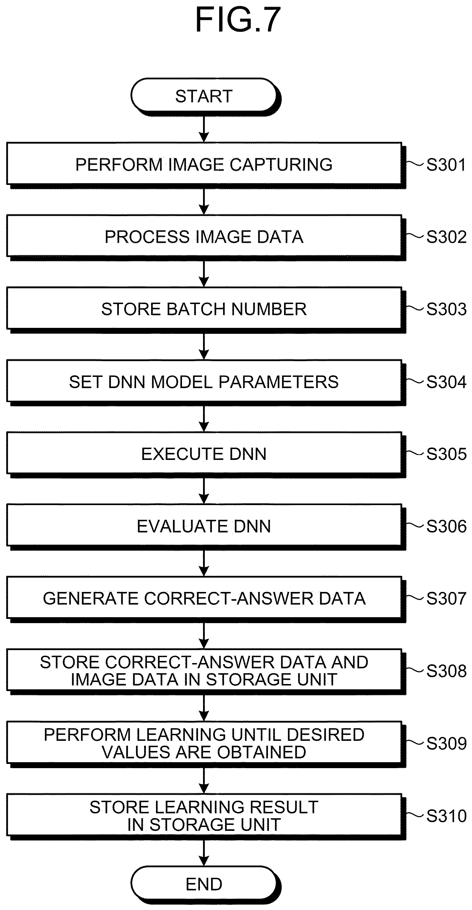

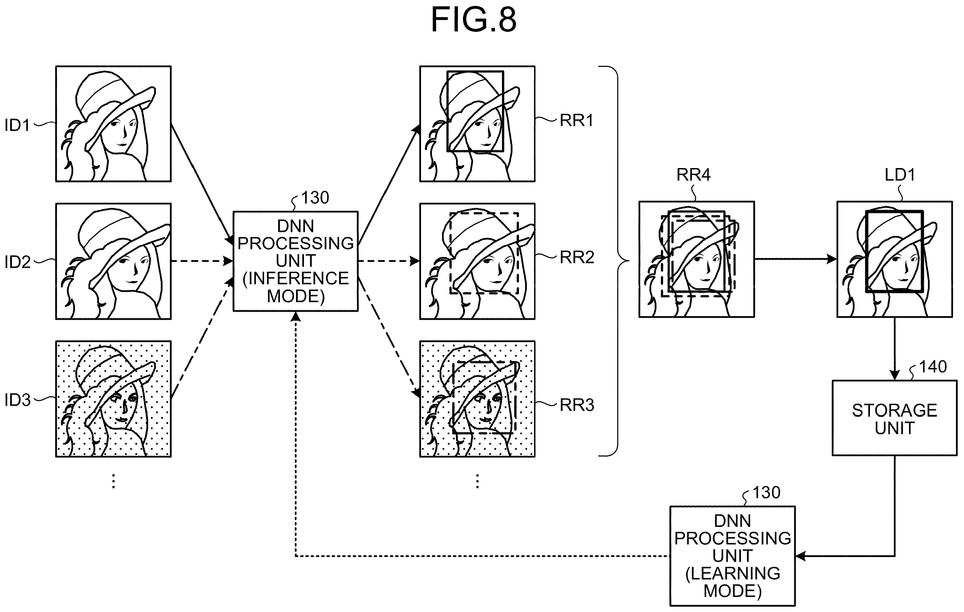

The following describes learning processing performed while the image capturing unit 110 sequentially performs image capturing with reference to FIGS. 7 and 8. FIG. 7 is a flowchart illustrating the process of the learning processing performed while the image capturing unit 110 sequentially performs image capturing. FIG. 8 is a schematic diagram for description of processing on image data.

First, the solid-state image capturing device 100 performs image capturing of an optional object (step S301). Specifically, the solid-state image capturing device 100 causes the image capturing unit 110 to perform image capturing of an optional object.

Subsequently, the solid-state image capturing device 100 processes image data obtained through the image capturing (step S302). Specifically, the solid-state image capturing device 100 causes the image capturing processing unit 120 to execute any of the preprocessing, the data extension, and the data normalization on the image data.

Subsequently, the solid-state image capturing device 100 stores a batch number in the storage unit 140 (step S303). Specifically, the solid-state image capturing device 100 causes the DNN processing unit 130 to store a batch number in the storage unit 140.

Subsequently, the solid-state image capturing device 100 sets parameters of a DNN model (step S304). Specifically, the solid-state image capturing device 100 causes the DNN control unit 160 to control the DNN processing unit 130 to set parameters of a DNN model stored in the storage unit 140.

Subsequently, the solid-state image capturing device 100 executes a DNN (step S305). Specifically, the solid-state image capturing device 100 causes the DNN processing unit 130 to execute a DNN model based on the DNN model having the parameters changed at step S304. More specifically, the DNN processing unit 130 executes the DNN model for a plurality of pieces of image data and outputs a recognition result for each of the pieces of image data. In this process, the DNN processing unit 130 is set to be in an inference theory mode. For example, as illustrated in FIG. 8, first image data ID1, second image data ID2 obtained by converting the aspect ratio of the first image data ID1, and third image data ID3 obtained by applying noise to the first image data ID1 are input to the DNN processing unit 130. Then, the DNN processing unit 130 outputs a first recognition result RR1, a second recognition result RR2, and a third recognition result RR3 as recognition results of the first image data ID1, the second image data ID2, and the third image data ID3, respectively. A face position is recognized in each of the first recognition result RR1, the second recognition result RR2, and the third recognition result RR3. The face positions recognized in the first recognition result RR1, the second recognition result RR2, and the third recognition result RR3 are placed over one another as a fourth recognition result RR4.

Subsequently, the solid-state image capturing device 100 evaluates the DNN executed at step S305 (step S306). Specifically, the solid-state image capturing device 100 causes the evaluation unit 150 to calculate the values of the loss function and the accuracy of the DNN. In addition, the solid-state image capturing device 100 causes the evaluation unit 150 to generate evaluation information based on the values of the accuracy of the DNN and the loss function.

Subsequently, the solid-state image capturing device 100 generates correct-answer data based on the recognition results and the evaluation information (step S307). Specifically, the solid-state image capturing device 100 causes the evaluation unit 150 to generate correct-answer data based on the first recognition result RR1, the second recognition result RR2, the third recognition result RR3, the evaluation information, and the like. For example, as illustrated in FIG. 8, the evaluation unit 150 generates correct-answer data by calculating an average of the first recognition result RR1, the second recognition result RR2, and the third recognition result RR3. In this example, the evaluation unit 150 generates correct-answer data by using an arithmetic average, but may generate correct-answer data by using a weighted average. For example, the evaluation unit 150 may exclude, from the average processing, a recognition result having an accuracy equal to or lower than a threshold value determined in advance (recognition result having a low accuracy) among the recognition results. When calculating the average of the recognition results, the evaluation unit 150 preferably corrects the coordinates (positional relation) of each recognition result with respect to the original image data. For example, for image data translated by the image capturing processing unit 120, a recognition result obtained by the DNN processing unit 130 is translated from the original image data as well. Thus, the evaluation unit 150 preferably translates and corrects the recognition result to have coordinates identical to those of the original image data before averaging.

Subsequently, the solid-state image capturing device 100 stores the correct-answer data and the image data in the storage unit 140 (step S308). Specifically, the solid-state image capturing device 100 causes the evaluation unit 150 to store the correct-answer data and the image data in the storage unit 140 as learning data LD1. Accordingly, in the present embodiment, the solid-state image capturing device 100 can automatically generate teacher data based on a plurality of authentication results. In other words, the process of annotation can be automated without manual operation.

Subsequently, the solid-state image capturing device 100 performs learning until the values of the loss function and the accuracy of the DNN reach desired values (step S309). Specifically, the solid-state image capturing device 100 causes, based on a control signal, the DNN processing unit 130 to perform learning until the values of the loss function and the accuracy of the DNN reach the desired values. More specifically, as illustrated in FIG. 8, the DNN control unit 160 controls the DNN processing unit 130 to execute, by using the learning data LD1 stored in the storage unit 140 at step S308, learning of the DNN model used at step S305. In this process, the DNN processing unit 130 is set to be in a learning mode. Note that the DNN processing unit 130 may execute learning of the DNN model by using the learning data LD1 in a mixture with learning data stored in the storage unit 140 in advance. In this case, a constant number of pieces of generated learning data included in the batch number stored at step S303 are preferably mixed. The DNN processing unit 130 may perform learning by using the learning data LD1 only. As described above, in the present embodiment, the process of annotation is automated. Thus, in the present embodiment, it is possible to automatically perform learning of the DNN model without externally outputting image data from the solid-state image capturing device 100.

Subsequently, the solid-state image capturing device 100 stores a result of the learning in the storage unit 140 (step S310). Specifically, the solid-state image capturing device 100 causes the DNN control unit 160 to control the DNN processing unit 130 to store the learning-completed DNN model in the storage unit 140.

Note that the evaluation unit 150 may generate learning data by executing the above-described processing again by using the learning-completed DNN model stored in the storage unit 140 at step S310. The solid-state image capturing device 100 may execute learning of the DNN model by using not only image data captured by the image capturing unit 110 but also learning image data stored in the storage unit 140.

### [1-3. Use Case of solid-state image capturing system according to first embodiment]

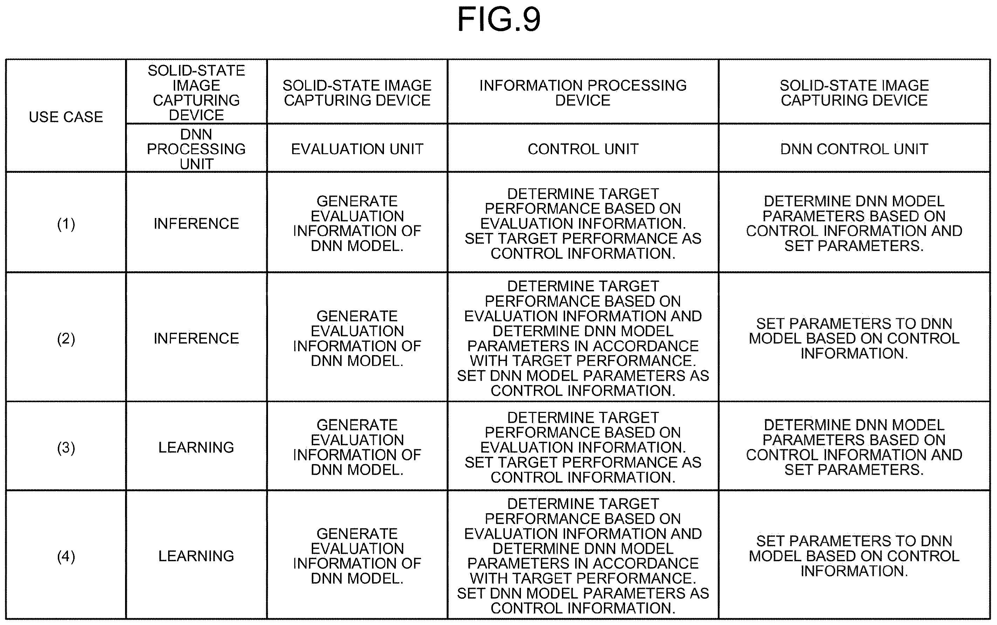

The following describes use cases when a DNN model is changed with reference to FIG. 9. FIG. 9 is a table listing the use cases when the DNN model is changed.

Use Case 1 is operation at inference by the DNN processing unit 130. In this operation, the evaluation unit 150 of the solid-state image capturing device 100 generates evaluation information of an executed DNN model. The control unit 230 of the information processing device 200 determines target performance based on the evaluation information. In this case, the target performance is set to be control information. In other words, in Use Case 1, the control information includes no parameters of the DNN model. Then, the DNN control unit 160 of the solid-state image capturing device 100 determines the parameters of the DNN model based on the control information and sets the parameters to the DNN model.

Use Case 2 is operation at inference by the DNN processing unit 130. In this operation, the evaluation unit 150 of the solid-state image capturing device 100 generates evaluation information of an executed DNN model. The control unit 230 of the information processing device 200 determines target performance based on the evaluation information and determines parameters of the DNN model. In this case, the parameters of the DNN model is set to be control information. In other words, in Use Case 2, the control information includes target settings and the parameters of the DNN model. Then, the DNN control unit 160 of the solid-state image capturing device 100 determines the parameters of the DNN model based on the control information and sets the parameters to the DNN model.

Use Case 3 is operation at learning by the DNN processing unit 130. In this operation, the evaluation unit 150 of the solid-state image capturing device 100 generates evaluation information of an executed DNN model. The control unit 230 of the information processing device 200 determines target performance based on the evaluation information. In this case, the target performance is set to be control information. In other words, in Use Case 3, the control information includes no parameters of the DNN model. Then, the DNN control unit 160 of the solid-state image capturing device 100 determines the parameters of the DNN model based on the control information and sets the parameters to the DNN model.

Use Case 4 is operation at learning by the DNN processing unit 130. In this operation, the evaluation unit 150 of the solid-state image capturing device 100 generates evaluation information of an executed DNN model. The control unit 230 of the information processing device 200 determines target performance based on the evaluation information and determines parameters of the DNN model. In this case, the parameters of the DNN model is set as control information. In other words, in Use Case 4, the control information includes target settings and the parameters of the DNN model. Then, the DNN control unit 160 of the solid-state image capturing device 100 determines the parameters of the DNN model based on the control information and sets the parameters to the DNN model.

### [1-4. Modification of solid-state image capturing system according to first embodiment]

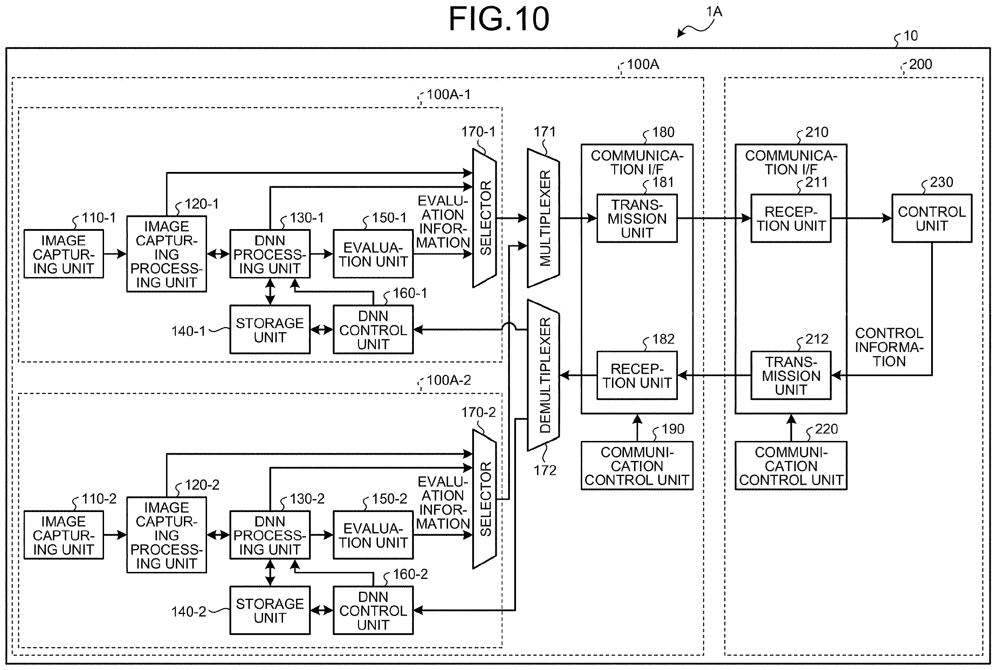

The following describes the configuration of a solid-state image capturing system according to a modification of the first embodiment with reference to FIG. 10. FIG. 10 is a block diagram illustrating the configuration of the solid-state image capturing system according to the modification of the first embodiment.

As illustrated in FIG. 10, this solid-state image capturing system 1A includes a solid-state image capturing device 100A and the information processing device 200.

The solid-state image capturing device 100A includes image capturing units 110-1 and 110-2, image capturing processing units 120-1 and 120-2, DNN processing units 130-1 and 130-2, storage units 140-1 and 140-2, evaluation units 150-1 and 150-2, DNN control units 160-1 and 160-2, selectors 170-1 and 170-2, a multiplexer 171, a demultiplexer 172, the communication I/F 180, and the communication control unit 190. Accordingly, the solid-state image capturing device 100A includes two image capturing units, two image capturing processing units, two DNN processing units, two storage units, two evaluation units, two DNN control units, and two selectors.

In this case, one solid-state image capturing device 100A-1 is constituted by the image capturing unit 110-1, the image capturing processing unit 120-1, the DNN processing unit 130-1, the storage unit 140-1, an evaluation unit 150-, the DNN control unit 160-1, and the selector 170-1. In addition, one solid-state image capturing device 100A-2 is constituted by the image capturing unit 110-2, the image capturing processing unit 120-2, the DNN processing unit 130-2, the storage unit 140-2, the evaluation unit 150-2, the DNN control unit 160-2, and the selector 170-2. Each component included in the solid-state image capturing device 100A-1 and the solid-state image capturing device 100A-2 is same as that in the solid-state image capturing device 100, and thus description thereof is omitted.

Signals output from the solid-state image capturing device 100A-1 and the solid-state image capturing device 100A-2 are input to the multiplexer 171. The multiplexer 171 collectively inputs, to the transmission unit 181 of the communication I/F 180, the signals output from the solid-state image capturing device 100A-1 and the solid-state image capturing device 100A-2. Accordingly, the signals output from the solid-state image capturing device 100A-1 and the solid-state image capturing device 100A-2 are transmitted to the information processing device 200.

Control information output from the information processing device 200 is input to the demultiplexer 172 through the reception unit 182 of the communication I/F 180. The demultiplexer 172 divides the input control information into two and inputs the two pieces of information to the DNN control unit 160-1 and the DNN control unit 160-2, respectively. Accordingly, the control information is input to the solid-state image capturing device 100A-1 and the solid-state image capturing device 100A-2.

In FIG. 10, the solid-state image capturing device 100A-1 and the solid-state image capturing device 100A-2 each include the storage unit, the evaluation unit, and the DNN control unit, but this configuration is merely exemplary and does not limit the present disclosure. The solid-state image capturing device 100A-1 and the solid-state image capturing device 100A-2 may share a storage unit, an evaluation unit, and a DNN control unit.

### (2. Second embodiment)

### [2-1. Configuration of solid-state image capturing system according to second embodiment]

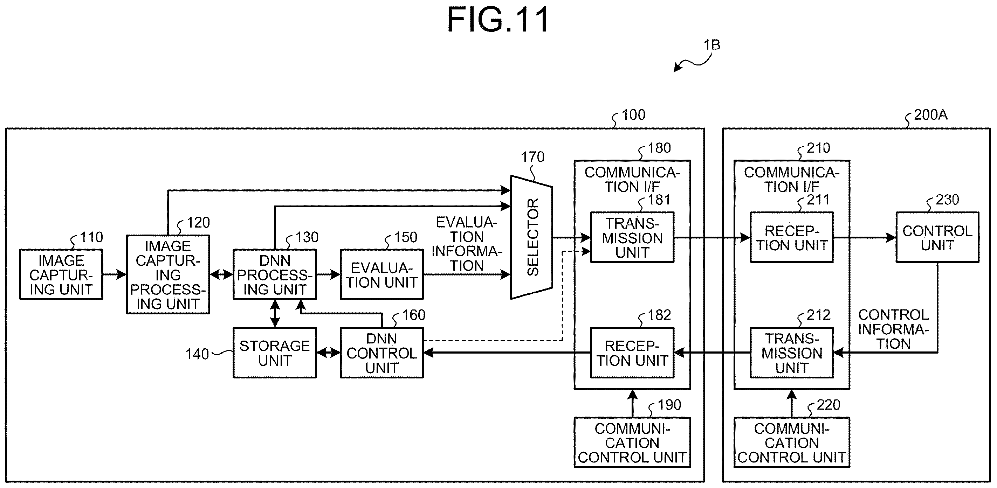

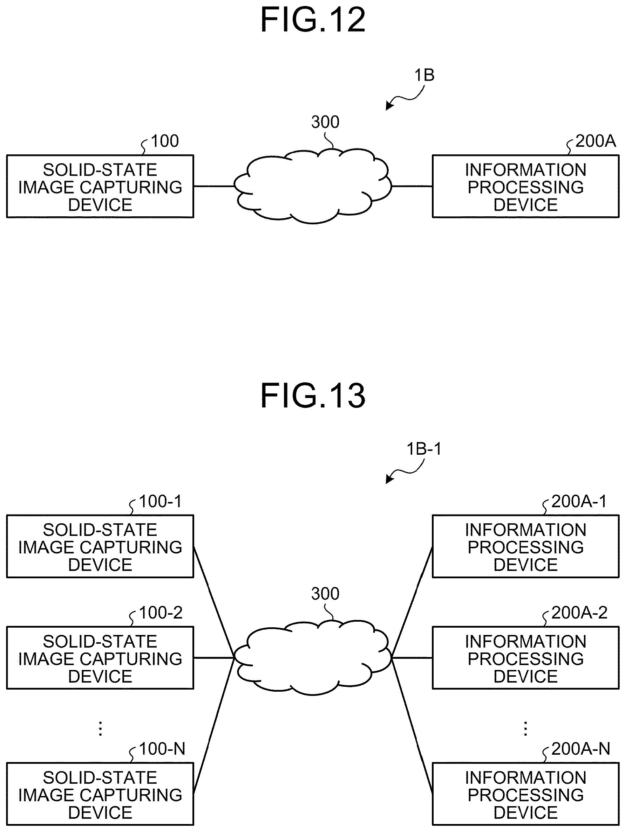

The following describes the configuration of a solid-state image capturing system according to a second embodiment of the present disclosure with reference to FIGS. 11 and 12. FIG. 11 is a block diagram illustrating an exemplary configuration of the solid-state image capturing system according to the second embodiment of the present disclosure. FIG. 12 is a diagram for description of a connection relation of the solid-state image capturing system according to the second embodiment of the present disclosure.

As illustrated in FIG. 11, this solid-state image capturing system 1B includes the solid-state image capturing device 100 and an information processing device 200A. Components and operation of each device included in the solid-state image capturing system 1B are same as those of the solid-state image capturing system 1 according to the first embodiment, and thus description thereof is omitted.

As illustrated in FIG. 12, the solid-state image capturing device 100 and the information processing device 200A are connected with each other through, for example, the internet communication network 300 to perform communication therebetween. In this case, the communication I/F 180 of the solid-state image capturing device 100 and the communication I/F 210 of the information processing device 200A may be connected with each other through the internet communication network 300 to perform communication therebetween. The communication I/F 180 of the solid-state image capturing device 100 and the communication I/F 210 of the information processing device 200A may be connected with each other through wireless communication to perform communication therebetween. In the second embodiment, the information processing device 200A is, for example, a cloud server connected with the solid-state image capturing device 100 through the internet communication network 300 and wireless communication to perform communication therebetween. The solid-state image capturing system 1B is applicable to, for example, factory automation (FA) or a monitoring camera.

### [2-2. Configuration of modification of solid-state image capturing system according to second embodiment]

The following describes a modification of the solid-state image capturing system according to the second embodiment of the present disclosure with reference to FIG. 13. FIG. 13 is a diagram for description of a modification of the connection relation of the solid-state image capturing system according to the second embodiment of the present disclosure.

This solid-state image capturing system 1B-1 includes a solid-state image capturing device 100-1, a solid-state image capturing device 100-2, ..., and a solid-state image capturing device 100-N (N is an integer equal to or larger than three), an information processing device 200A-1, an information processing device 200A-2, ..., and an information processing device 200-N. Specifically, in the solid-state image capturing system 1B-1, each of a plurality of solid-state image capturing devices is connected with each of a plurality of information processing devices through the internet communication network 300 to perform communication therebetween. In the solid-state image capturing system 1B-1, the number of solid-state image capturing devices and the number of information processing devices may be equal to each other or may be different from each other.

Although the solid-state image capturing system 1B-1 includes a plurality of solid-state image capturing devices and a plurality of information processing devices, this configuration is merely exemplary and does not limit the present disclosure. The solid-state image capturing system 1B-1 may include, for example, one solid-state image capturing device and a plurality of information processing devices. Alternatively, the solid-state image capturing system 1B-1 may include, for example, a plurality of solid-state image capturing devices and one information processing device.

### (3. Third embodiment)

### [3-1. Configuration of solid-state image capturing system according to third embodiment]

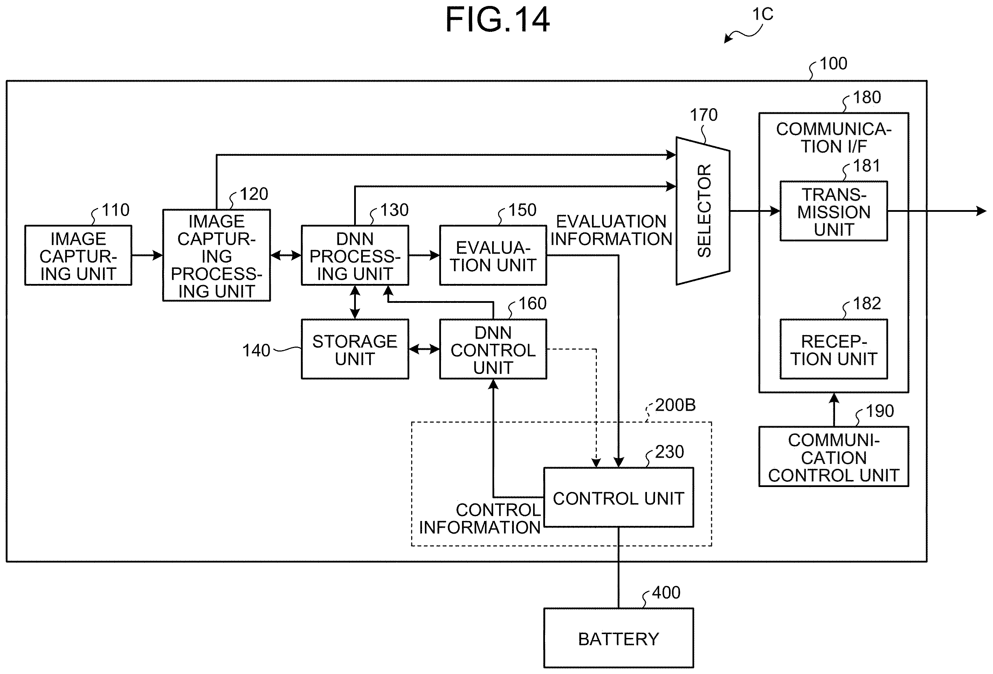

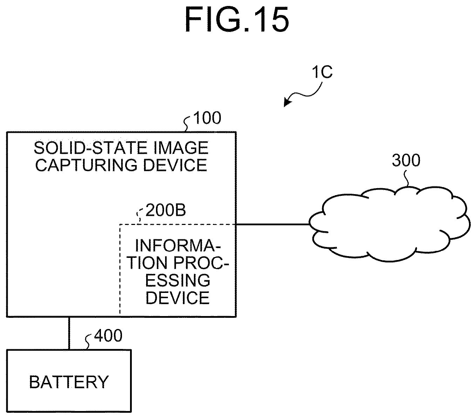

The following describes the configuration of a solid-state image capturing system according to a third embodiment of the present disclosure with reference to FIGS. 14 and 15. FIG. 14 is a block diagram illustrating an exemplary configuration of the solid-state image capturing system according to the third embodiment of the present disclosure. FIG. 15 is a diagram for description of a connection relation of the solid-state image capturing system according to the third embodiment of the present disclosure.

As illustrated in FIG. 14, this solid-state image capturing system 1C includes the solid-state image capturing device 100, an information processing device 200B, and a battery 400. Components of the solid-state image capturing device 100 are same as those of the solid-state image capturing device 100 of the solid-state image capturing system 1 according to the first embodiment, and thus description thereof is omitted.

As illustrated in FIG. 15, the information processing device 200B is disposed inside the solid-state image capturing device 100. The solid-state image capturing device 100 and the information processing device 200B are each mounted as a SoC, a MCM, a SIP, a SOP, or the like. The battery 400 is connected with the solid-state image capturing system 1C. The battery 400 supplies electrical power to the solid-state image capturing system 1C. The solid-state image capturing system 1C is applicable to, for example, an internet-of-things (IoT) camera.

FIG. 14 is referred to again. The information processing device 200B includes the control unit 230. In the third embodiment, the evaluation unit 150 directly outputs, for example, evaluation information to the control unit 230.

The control unit 230 receives, for example, the evaluation information from the evaluation unit 150. The control unit 230 is connected with, for example, the battery 400 and measures the electrical power remaining amount of the battery 400. In this case, the control unit 230 generates control information for changing a DNN model based on, for example, the evaluation information and the electrical power remaining amount of the battery 400. Specifically, when the electrical power remaining amount of the battery 400 is low, the control unit 230 generates control information for changing a DNN model to another DNN model having less electric power consumption. Then, the control unit 230 directly inputs the generated control information to the DNN control unit 160. Accordingly, the DNN control unit 160 can perform a change to a DNN model in accordance with the electrical power remaining amount of the battery 400 by controlling the DNN processing unit 130.

### (4. Hardware configuration)

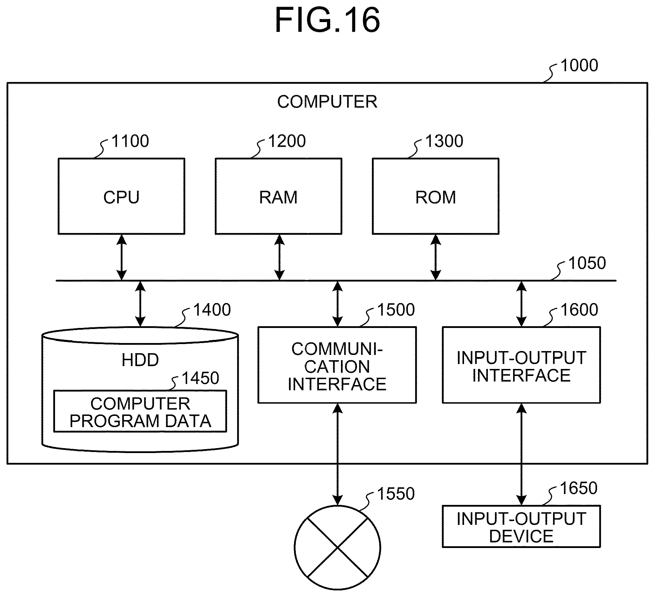

The solid-state image capturing device and the information processing device according to each above-described embodiment are achieved by, for example, a computer 1000 having a configuration as illustrated in FIG. 16. The following describes an example with the solid-state image capturing device 100 according to the first embodiment. FIG. 16 is a hardware configuration diagram illustrating an exemplary computer 1000 configured to achieve functions of the solid-state image capturing device 100. The computer 1000 includes a CPU 1100, a RAM 1200, a ROM (read only memory) 1300, an HDD (hard disk drive) 1400, a communication interface 1500, and an input-output interface 1600. The components of the computer 1000 are connected with one another through a bus 1050.

The CPU 1100 operates based on a computer program stored in the ROM 1300 or the HDD 1400 and performs control of each component. For example, the CPU 1100 executes processing corresponding to various computer programs by loading the computer programs stored in the ROM 1300 or the HDD 1400 onto the RAM 1200.

The ROM 1300 stores therein a boot program such as a basic input output system (BIOS) executed by the CPU 1100 at activation of the computer 1000, a computer program dependent on hardware of the computer 1000, and the like.

The HDD 1400 is a computer-readable recording medium in which a computer program executed by the CPU 1100, data used by the computer program, and the like are recorded in a non-temporary manner. Specifically, the HDD 1400 is a recording medium that records a computer program according to the present disclosure, which is exemplary computer program data 1450.

The communication interface 1500 is an interface for connecting the computer 1000 with an external network 1550 (for example, the Internet). For example, through the communication interface 1500, the CPU 1100 receives data from another instrument and transmits data generated by the CPU 1100 to another instrument.

The input-output interface 1600 is an interface for connecting the computer 1000 with an input-output device 1650. For example, the CPU 1100 receives data from an input device such as a keyboard or a mouse through the input-output interface 1600. The CPU 1100 transmits data to an output device such as a display, a speaker, or a printer through the input-output interface 1600. The input-output interface 1600 may function as a media interface for reading a computer program or the like recorded in a predetermined recording medium. The medium is, for example, an optical recording medium such as a digital versatile disc (DVD) or a phase change rewritable disk (PD), a magneto-optical recording medium such as a magneto-optical disk (MO), a tape medium, a magnetic recording medium, or a semiconductor memory.

For example, when the computer 1000 functions as the solid-state image capturing device 100 according to the first embodiment, the CPU 1100 of the computer 1000 achieves the function of each component included in the solid-state image capturing device 100 by executing a computer program loaded onto the RAM 1200. The HDD 1400 stores therein a computer program according to the present disclosure. Note that the CPU 1100 reads the computer program data 1450 from the HDD 1400 and executes the computer program data 1450, but for example, may acquire these computer programs from another device through the external network 1550.

### (5. Exemplary application to endoscope operation system)

The technology (present technology) of the present disclosure is applicable to various products. For example, the technology of the present disclosure may be applied to an endoscope operation system.

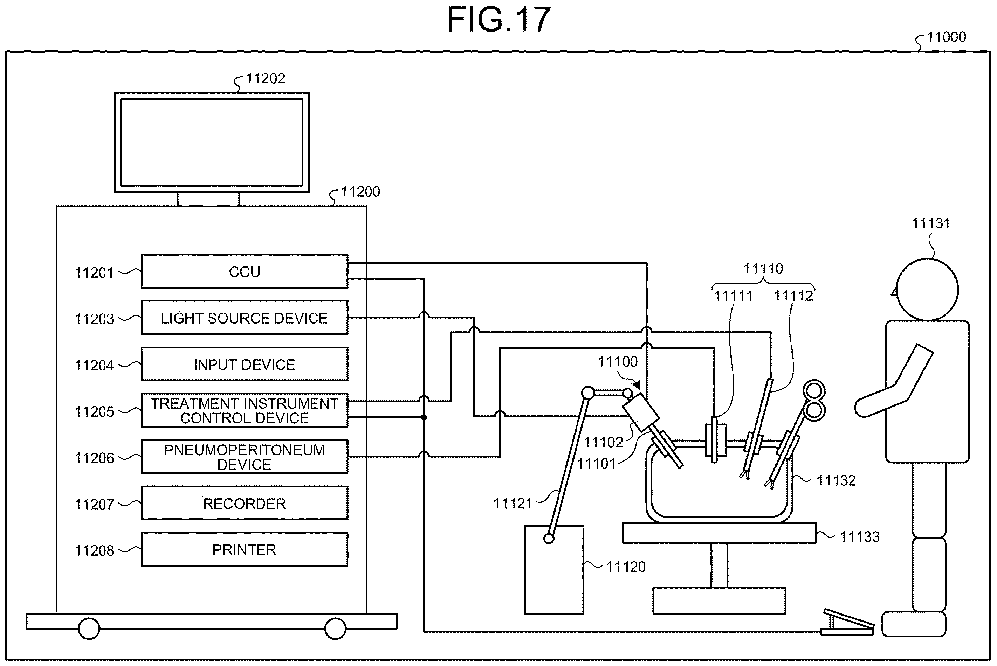

FIG. 17 is a diagram illustrating an exemplary schematic configuration of an endoscope operation system to which the technology (present technology) of the present disclosure is applicable.

FIG. 17 illustrates a situation in which an operator (doctor) 11131 performs a medical operation on a patient 11132 on a patient bed 11133 by using this endoscope operation system 11000. As illustrated in FIG. 17, the endoscope operation system 11000 includes an endoscope 11100, other operation instruments 11110 such as a pneumoperitoneum tube 11111 and an energy treatment instrument 11112, a support arm device 11120 supporting the endoscope 11100, and a cart 11200 on which various devices for an endoscopic medical operation are mounted.

The endoscope 11100 includes a lens barrel 11101, a region of which extending from the leading end by a predetermined length is inserted into the body cavity of the patient 11132, and a camera head 11102 connected with the base end of the lens barrel 11101. In the illustrated example, the endoscope 11100 is configured as what is called a rigid scope including the lens barrel 11101 that is rigid, but the endoscope 11100 may be configured as what is called a flexible scope including a flexible lens barrel.

An opening to which an objective lens is fitted is provided at the leading end of the lens barrel 11101. A light source device 11203 is connected with the endoscope 11100, and light generated by the light source device 11203 is guided to the leading end of the lens barrel 11101 by a light guide extending inside the lens barrel 11101 and is emitted toward an observation target in the body cavity of the patient 11132 through the objective lens. Note that the endoscope 11100 may be a direct-view scope, an oblique-view scope, or a side-view scope.

An optical system and an image capturing element are provided inside the camera head 11102, and reflected light (observation light) from the observation target is condensed onto the image capturing element through the optical system. The observation light is photoelectrically converted by the image capturing element, and an electric signal corresponding to the observation light, in other words, an image signal corresponding to an observation image is generated. The image signal is transmitted to a camera control unit (CCU) 11201 as RAW data.

The CCU 11201 includes a central processing unit (CPU) and a graphics processing unit (GPU), and collectively controls operation of the endoscope 11100 and a display device 11202. In addition, the CCU 11201 receives the image signal from the camera head 11102 and provides the image signal with various image processing, such as image development processing (demosaic processing), for displaying an image based on the image signal.

The display device 11202 displays, under control of the CCU 11201, an image based on the image signal provided with the image processing by the CCU 11201.

The light source device 11203 includes a light source such as a light emitting diode (LED) and supplies, to the endoscope 11100, irradiation light for image capturing of an operation site or the like.

An input device 11204 is an input interface for the endoscope operation system 11000. A user can input various kinds of information and instructions to the endoscope operation system 11000 through the input device 11204. For example, the user inputs an instruction to change image capturing conditions (such as irradiation light kind, magnification, and focal length) of the endoscope 11100.

A treatment instrument control device 11205 controls drive of the energy treatment instrument 11112 for tissue cauterization, incision, blood vessel sealing, or the like. A pneumoperitoneum device 11206 feeds gas into the body cavity through the pneumoperitoneum tube 11111 so that the body cavity of the patient 11132 is inflated to obtain a visual field of the endoscope 11100 and a work space for an operator. A recorder 11207 is a device capable of recording various kinds of information related to the medical operation. A printer 11208 is a device capable of printing various kinds of information related to the medical operation in various formats of text, image, graph, and the like.

Note that the light source device 11203 that supplies irradiation light for image capturing of an operation site to the endoscope 11100 may be achieved by a white light source configured as, for example, an LED, a laser beam source, or a combination thereof. When the white light source is configured as a combination of RGB laser beam sources, the output intensity and output timing of each color (wavelength) can be highly accurately controlled, and thus the white balance of a captured image can be adjusted at the light source device 11203. In addition, in this case, an image corresponding to each of RGB can be captured in a time divisional manner by irradiating an observation target with laser beams from the respective RGB laser beam sources in a time divisional manner and controlling drive of the image capturing elements of the camera head 11102 in synchronization with the timings of irradiation. With this method, a color image can be obtained without providing color filters to the image capturing elements.

In addition, drive of the light source device 11203 may be controlled so that the intensity of output light is changed in every predetermined time. Drive of the image capturing elements of the camera head 11102 is controlled in synchronization with the timing of the light intensity change to acquire images in a time divisional manner. The images can be synthesized to generate a high dynamic range image without what are called underexposure and overexposure.

The light source device 11203 may be capable of supplying light in a predetermined wavelength band for special light observation. In the special light observation, for example, what is called narrow band light observation (narrow band imaging) is performed in which an image of a predetermined tissue such as a blood vessel on the surface layer of mucous membrane is captured at high contrast through irradiation with light in a band narrower than the band of irradiation light (in other words, white light) in normal observation by using the wavelength dependency of light absorption in a body tissue. Alternatively, in the special light observation, fluorescence observation may be performed in which an image is obtained by using fluorescence generated through irradiation with excitation light. In the fluorescence observation, for example, a body tissue is irradiated with excitation light to observe fluorescence from the body tissue (self-fluorescence observation), or a reagent such as indocyanine green (ICG) is locally injected into a body tissue and the body tissue is irradiated with excitation light corresponding to the fluorescence wavelength of the reagent to obtain a fluorescence image. The light source device 11203 may be capable of supplying the narrow band light and/or excitation light corresponding to such special light observation.

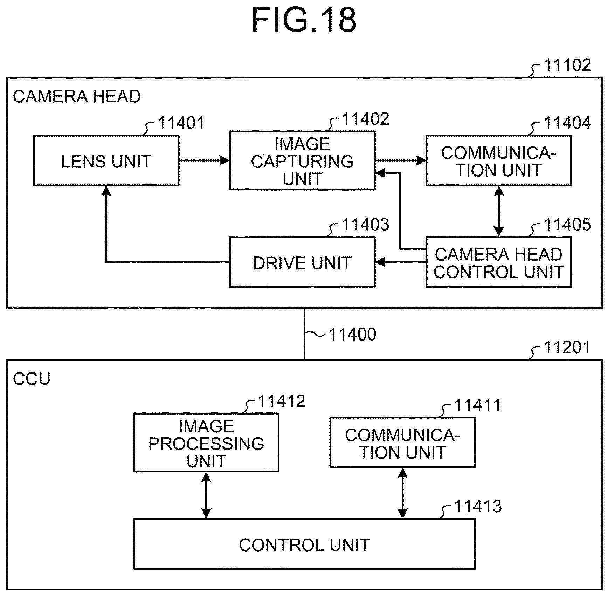

FIG. 18 is a block diagram illustrating exemplary functional configurations of the camera head 11102 and the CCU 11201 illustrated in FIG. 17.

The camera head 11102 includes a lens unit 11401, an image capturing unit 11402, a drive unit 11403, a communication unit 11404, and a camera head control unit 11405. The CCU 11201 includes a communication unit 11411, an image processing unit 11412, and a control unit 11413. The camera head 11102 and the CCU 11201 are connected with each other through a transmission cable 11400 to perform communication therebetween.

The lens unit 11401 is an optical system provided at a connection part with the lens barrel 11101. The observation light acquired from the leading end of the lens barrel 11101 is guided to the camera head 11102 and incident on the lens unit 11401. The lens unit 11401 is formed by combining a plurality of lenses including a zoom lens and a focus lens.

The image capturing unit 11402 includes an image capturing element. The image capturing unit 11402 may include one image capturing element (what is called a single-plate configuration) or a plurality of image capturing elements (what is called a multiple-plate configuration). When the image capturing unit 11402 has the multiple-plate configuration, for example, image signals corresponding to RGB may be generated by the respective image capturing elements and synthesized to obtain a color image. Alternatively, the image capturing unit 11402 may include a pair of image capturing elements for acquiring right-eye and left-eye image signals, respectively, for three-dimensional (3D) display. When 3D display is performed, the operator 11131 can more accurately understand the depth of a living body tissue at an operation site. Note that when the image capturing unit 11402 has the multiple-plate configuration, a plurality of lens units 11401 are provided for the respective image capturing elements.

The image capturing unit 11402 does not necessarily need to be provided to the camera head 11102. For example, the image capturing unit 11402 may be provided right after the objective lens inside the lens barrel 11101.

The drive unit 11403 is achieved by an actuator and moves each of the zoom and focus lenses of the lens unit 11401 along the optical axis by a predetermined distance under control of the camera head control unit 11405. Accordingly, the magnification and focal point of an image captured by the image capturing unit 11402 can be adjusted as appropriate.

The communication unit 11404 is achieved by a communication device for communicating various kinds of information with the CCU 11201. The communication unit 11404 transmits an image signal acquired from the image capturing unit 11402 to the CCU 11201 through the transmission cable 11400 as RAW data.

The communication unit 11404 receives a control signal for controlling drive of the camera head 11102 from the CCU 11201, and supplies the control signal to the camera head control unit 11405. The control signal includes information related to image capturing conditions, such as information on specification of the frame rate of a captured image, information on specification of an exposure value at image capturing, and/or information on specification of the magnification and focal point of the captured image.

Note that the above-described image capturing conditions such as the frame rate, the exposure value, the magnification, and the focal point may be specified by the user as appropriate or may be automatically set by the control unit 11413 of the CCU 11201 based on the acquired image signal. In the latter case, the endoscope 11100 has what are called an auto exposure (AE) function, an auto focus (AF) function, and an auto white balance (AWB) function.

The camera head control unit 11405 controls drive of the camera head 11102 based on the control signal received from the CCU 11201 through the communication unit 11404.

The communication unit 11411 is achieved by a communication device for communicating various kinds of information with the camera head 11102. The communication unit 11411 receives an image signal transmitted from the camera head 11102 through the transmission cable 11400.

The communication unit 11411 transmits a control signal for controlling drive of the camera head 11102 to the camera head 11102. The image signal and the control signal may be transmitted by electrical communication, optical communication, and the like.

The image processing unit 11412 performs various kinds of image processing on an image signal as RAW data transmitted from the camera head 11102.

The control unit 11413 performs various kinds of control related to image capturing of an operation site or the like by the endoscope 11100 and display of a captured image obtained through image capturing of an operation site or the like. For example, the control unit 11413 generates a control signal for controlling drive of the camera head 11102.

In addition, the control unit 11413 causes the display device 11202 to display a captured image of an operation site or the like based on the image signal on which the image processing is performed by the image processing unit 11412. In this case, the control unit 11413 may recognize various objects in the captured image by using various image recognition technologies. For example, the control unit 11413 detects the edge shape, color, and the like of each object included in the captured image to recognize for example, an operation instrument such as forceps, a particular living body site, bleeding, and mist when the energy treatment instrument 11112 is used. When causing the display device 11202 to display the captured image, the control unit 11413 uses a result of the recognition to display various kinds of operation support information on the image of the operation site in a superimposing manner. When the operation support information is displayed in a superimposing manner and presented to the operator 11131, a load on the operator 11131 can be reduced, and the operator 11131 can reliably perform a medical operation.

The transmission cable 11400 connecting the camera head 11102 and the CCU 11201 is an electric signal cable compatible with electric signal communication, an optical fiber compatible with optical communication, or a composite cable thereof.

In the illustrated example, communication is performed in a wired manner by using the transmission cable 11400, but communication between the camera head 11102 and the CCU 11201 may be performed in a wireless manner.

The above description is made on an example of the endoscope operation system to which the technology of the present disclosure is applicable. The technology of the present disclosure is applicable to, for example, the endoscope 11100, the image capturing unit 11402 of the camera head 11102, and the image processing unit 11412 of the CCU 11201 among the above-described components. Specifically, the solid-state image capturing device 100 according to the present disclosure is applicable to the endoscope 11100, the image capturing unit 11402 of the camera head 11102, the image processing unit 11412 of the CCU 11201, and the like. When the technology of the present disclosure is applied to these components, it is possible to improve performance of the endoscope operation system. For example, it is possible to obtain a high-definition captured image by using the solid-state image capturing device 100 having an enlarged dynamic range. Specifically, it is easy to recognize an object at a place having a large grayscale difference in image capturing inside and outside a living body. In addition, the solid-state image capturing device can perform fast operation, which leads to reduction of a time taken for operation from object sensing to control of the camera head 11102 and the like.

### (6. Exemplary application 1)

The technology of the present disclosure is applicable to various products. For example, the technology of the present disclosure may be applied to a pathological diagnosis system with which a doctor or the like diagnoses a lesion by observing cells and tissues collected from a patient, and a support system for the diagnosis (hereinafter referred to as a diagnosis support system). The diagnosis support system may be a whole slide imaging (WSI) system that diagnoses a lesion based on an image acquired by using a digital pathology technology or supports the diagnosis.

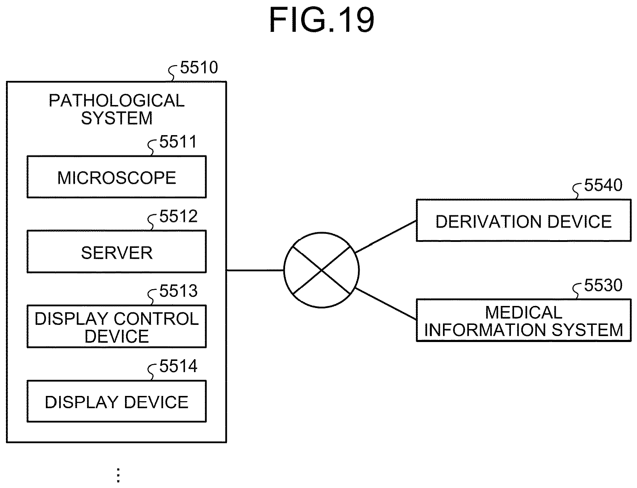

FIG. 19 is a diagram illustrating an exemplary schematic configuration of a diagnosis support system 5500 to which the technology of the present disclosure is applied. As illustrated in FIG. 19, the diagnosis support system 5500 includes one or more pathological systems 5510. The diagnosis support system 5500 may also include a medical information system 5530 and a derivation device 5540.

The one or more pathological systems 5510 are each a system mainly used by a pathologist and installed in, for example, a laboratory or a hospital. The pathological systems 5510 may be installed in hospitals different from each other and each connected with the medical information system 5530 and the derivation device 5540 through various kinds of networks such as a wide area network (WAN) (including the Internet), a local area network (LAN), a public network, and a mobile communication network.

Each pathological system 5510 includes a microscope 5511, a server 5512, a display control device 5513, and a display device 5514.

The microscope 5511 has the function of an optical microscope, performs image capturing of an observation object set in a glass slide, and acquires a pathological image as a digital image. The observation object is, for example, a tissue or a cell collected from a patient or may be a piece of an organ, saliva, or blood.

The server 5512 stores and records the pathological image acquired by the microscope 5511 in a storage unit (not illustrated). When having received a browsing request from the display control device 5513, the server 5512 searches the storage unit (not illustrated) for a pathological image and transfers the searched pathological image to the display control device 5513.

The display control device 5513 transfers a request to browse a pathological image, which is received by a user, to the server 5512. Then, the display control device 5513 displays the pathological image received from the server 5512 on the display device 5514 using a liquid crystal display, an electro-luminescence (EL) display, or a cathode ray tube (CRT) display. Note that the display device 5514 may be compatible with 4K and 8K, and the number of display devices is not limited to one but may be two or more.

When the observation object is a solid matter such as a piece of an organ, the observation object may be, for example, a dyed slice. The slice may be produced by, for example, slicing a block piece cut out from a sample such as an organ. At the slicing, the block piece may be fixed by, for example, paraffin.

The dyeing of the slice may be achieved by various kinds of dyeing, for example, general dyeing to visualize the form of a tissue, such as hematoxylin-eosin (HE) dyeing, or immunity dyeing to visualize the immunity state of a tissue, such as immunohistochemistry (IHC) dyeing. One slice may be dyed by using a plurality of different reagents, or two or more slices (also referred to as adjacent slices) continuously cut out from the same block piece may be dyed by using reagents different from each other.

The microscope 5511 may include a low-resolution image capturing unit for image capturing at low resolution, and a high-resolution image capturing unit for image capturing at high resolution. The low-resolution image capturing unit and the high-resolution image capturing unit may be different optical systems or may be an identical optical system. When the image capturing units are an identical optical system, the resolution of the microscope 5511 may be changed in accordance with an image capturing target.

The glass slide in which the observation object is set is placed on a stage positioned in the angle of view of the microscope 5511. The microscope 5511 first acquires the entire image in the angle of view by using the low-resolution image capturing unit and specifies the region of the observation object from the acquired entire image. Subsequently, the microscope 5511 divides the region in which the observation object exists into a plurality of divided regions of a predetermined size, and sequentially captures images of the divided regions through the high-resolution image capturing unit, thereby acquiring a high-resolution image of each divided region. At switching of a target divided region, the stage may be moved, an image capturing optical system may be moved, or both may be moved. Each divided region may overlap with an adjacent divided region to prevent generation of an uncaptured region and the like due to unintended slipping of the glass slide. The entire image may include identification information for associating the entire image with a patient. The identification information may be, for example, a string or a QR code (registered trademark).

High-resolution images acquired by the microscope 5511 are input to the server 5512. The server 5512 divides each high-resolution image into partial images (hereinafter referred to as tile images) of a smaller size. For example, the server 5512 divides one high-resolution image into 100 tile images of 10 tiles × 10 tiles in longitudinal and transverse directions. When adjacent divided regions overlap with each other, the server 5512 may provide stitching processing to high-resolution images adjacent to each other by using a technique such as template matching. In this case, the server 5512 may generate tile images by dividing a high-resolution whole image bonded together by the stitching processing. However, the generation of tile images from a high-resolution image may be performed before the above-described stitching processing.

The server 5512 may generate tile images of a smaller size by further dividing each tile image. The generation of such tile images may be repeated until tile images of a size set as a minimum unit are generated.

Once tile images of the minimum unit are generated in this manner, the server 5512 executes, for every tile image, tile synthesis processing of generating one tile image by synthesizing a predetermined number of adjacent tile images. The tile synthesis processing may be repeated until one tile image is finally generated. Through such processing, a tile image group in a pyramid structure including one or more tile images at each level is generated. In this pyramid structure, the number of pixels of tile images of a layer is equal to the number of pixels of tile images of another layer, but the resolutions thereof are different from each other. For example, when four tile images of 2×2 are synthesized to generate one tile image of the upper layer, the resolution of the tile image of the upper layer is half of the resolution of the tile images of the lower layer used in the synthesis.

When such a tile image group in the pyramid structure is established, it is possible to switch the level of detail of the observation object displayed on the display device, depending on a level to which a display target tile image belongs. For example, a narrow region of the observation object may be displayed in detail when tile images of the lowermost layer are used, and a wider region of the observation object may be coarsely displayed as tile images of an upper layer are used.

The generated tile image group in the pyramid structure is stored in the storage unit (not illustrated) together with, for example, identification information (referred to as tile identification information) with which each tile image is uniquely identifiable. When having received, from another device (for example, the display control device 5513 or the derivation device 5540), a request to acquire a tile image including the tile identification information, the server 5512 transmits the tile image corresponding to the tile identification information to the other device.

Note that a tile image as a pathological image may be generated for each image capturing condition such as a focal length or a dye condition. When a tile image is generated for each image capturing condition, a particular pathological image may be displayed side by side with another pathological image corresponding to an image capturing condition different from a particular image capturing condition and corresponding to a region identical to the region of the particular pathological image. The particular image capturing condition may be specified by a browsing person. When a plurality of image capturing conditions are specified by the browsing person, pathological images corresponding to the respective image capturing conditions and an identical region may be displayed side by side.

The server 5512 may store the tile image group in the pyramid structure in another storage device other than the server 5512, for example, in a cloud server. Part or all of the tile image generation processing as described above may be executed at a cloud server or the like.

The display control device 5513 extracts a desired tile image from the tile image group in the pyramid structure in accordance with an input operation from the user and outputs the tile image to the display device 5514. Through such processing, the user can obtain a sense of observing the observation object by changing the magnification of observation. In other words, the display control device 5513 functions as a virtual microscope. The magnification of virtual observation corresponds to resolution in reality.

Note that a high-resolution image may be captured by any method. A high-resolution image may be acquired by capturing images of divided regions while repeating stopping and moving of the stage, or a high-resolution image on a strip may be acquired by capturing images of divided regions while moving the stage at a predetermined speed. The processing of generating tile images from a high-resolution image is not essential, but the resolution of a high-resolution whole image bonded together by the stitching processing may be changed at stages to generate images among which the resolution is different at stages. In this case as well, a low-resolution image of a wide area to a high-resolution image of a narrow area can be presented at stages to the user.

The medical information system 5530 is what is called an electronic medical record system and stores therein information related to diagnosis, such as information that identifies a patient, disease information of the patient, examination information and image information used for diagnosis, a diagnosis result, and a prescription. For example, a pathological image obtained through image capturing of an observation object of a patient may be temporarily stored through the server 5512 and then displayed on the display device 5514 by the display control device 5513. A pathologist using the pathological system 5510 performs pathological diagnosis based on the pathological image displayed on the display device 5514. A result of the pathological diagnosis performed by the pathologist is stored in the medical information system 5530.

The derivation device 5540 may execute analysis of the pathological image. This analysis can use a learning model produced by machine learning. The derivation device 5540 may derive, as a result of the analysis, a result of classification of a specific region, a result of identification of a tissue, or the like. In addition, the derivation device 5540 may derive identification results such as cell information, numbers, positions, and luminance information, scoring information thereof, and the like. These pieces of information derived by the derivation device 5540 may be displayed as diagnosis support information on the display device 5514 of the pathological system 5510.

Note that the derivation device 5540 may be a server system constituted by one or more servers (including cloud servers). The derivation device 5540 may be incorporated in, for example, the display control device 5513 or the server 5512 in the pathological system 5510. In other words, various kinds of analysis on a pathological image may be executed in the pathological system 5510.

The technology of the present disclosure is excellently applicable to the microscope 5511 among the above-described components. Specifically, the solid-state image capturing device 100 according to the present disclosure is excellently applicable to the microscope 5511. When the technology of the present disclosure is applied to the microscope 5511, it is possible to obtain a clearer pathology image and thus more accurately diagnose a lesion. In addition, it is possible to obtain a pathology image at lower latency and thus faster and more accurately perform diagnosis.

### (7. Exemplary application to moving object)

The technology (present technology) of the present disclosure is applicable to various products. For example, the technology of the present disclosure may be achieved as a device mounted on any kind of a moving object such as an automobile, an electric vehicle, a hybrid electric vehicle, an automatic two-wheel vehicle, a bicycle, a personal mobility, an airplane, a drone, a ship, or a robot.

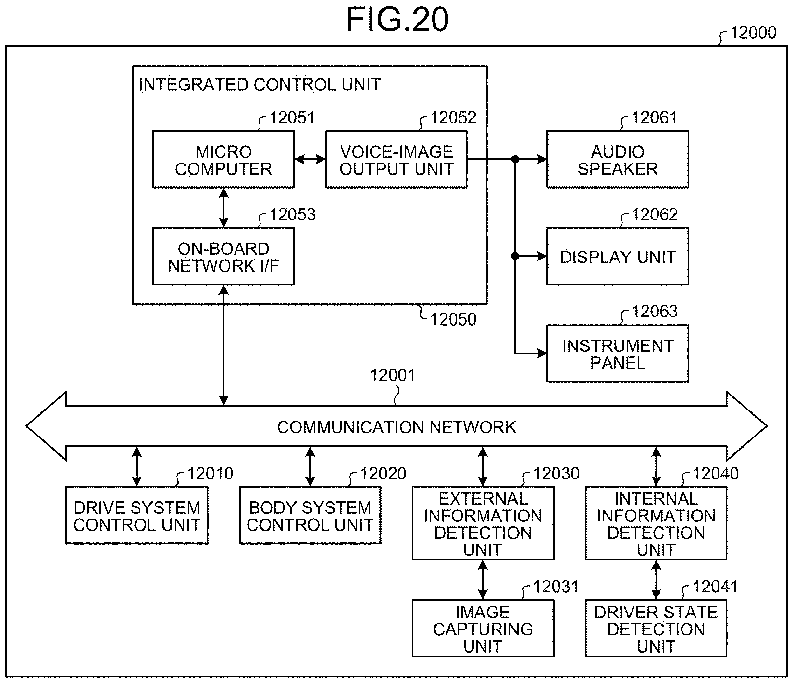

FIG. 20 is a block diagram illustrating an exemplary schematic configuration of a vehicle control system as an exemplary moving object control system to which the technology of the present disclosure is applicable.

This vehicle control system 12000 includes a plurality of electronic control units connected with each other through a communication network 12001. In the example illustrated in FIG. 20, the vehicle control system 12000 includes a drive system control unit 12010, a body system control unit 12020, an external information detection unit 12030, an internal information detection unit 12040, and an integrated control unit 12050. In addition, a microcomputer 12051, a voice-image output unit 12052, and an on-board network I/F (interface) 12053 are illustrated as a functional configuration of the integrated control unit 12050.

The drive system control unit 12010 controls operation of devices related to a drive system of a vehicle in accordance with various computer programs. For example, the drive system control unit 12010 functions as a control device for a drive power generation device, such as an internal combustion engine or a drive motor, for generating drive power of the vehicle, a drive power transmission mechanism for transferring the drive power to wheels, a steering mechanism configured to adjust the rudder angle of the vehicle, a braking device configured to generate braking force of the vehicle, and the like.

The body system control unit 12020 controls operation of various devices installed on a vehicle body in accordance with various computer programs. For example, the body system control unit 12020 functions as a control device for a keyless entry system, a smart key system, a power window device, and various lamps such as a head lamp, a rear lamp, a brake lamp, an indicator, and a fog lamp. In this case, the body system control unit 12020 can receive radio wave transmitted from a portable device serving as a key, or various switch signals. The body system control unit 12020 receives input of the radio wave or signals and controls a door lock device, a power window device, a lamp, and the like of the vehicle.

The external information detection unit 12030 detects information on the outside of the vehicle on which the vehicle control system 12000 is mounted. For example, the external information detection unit 12030 is connected with an image capturing unit 12031. The external information detection unit 12030 causes the image capturing unit 12031 to capture an external image and receives the captured image. The external information detection unit 12030 may perform, based on the received image, object detection processing or distance detection processing for a person, a car, an obstacle, a sign, a character on a road surface, and the like.

The image capturing unit 12031 is a light sensor configured to receive light and output an electric signal in accordance with the received-light quantity of the light. The image capturing unit 12031 may output the electric signal as an image or may output the electric signal as distance measurement information. Light received by the image capturing unit 12031 may be visible light or invisible light such as infrared.

The internal information detection unit 12040 detects internal information. The internal information detection unit 12040 is connected with, for example, a driver state detection unit 12041 configured to detect the state of a driver. The driver state detection unit 12041 includes a camera configured to capture an image of the driver, for example, and the internal information detection unit 12040 may calculate the degree of fatigue or concentration of the driver or determine whether the driver is dozing based on detection information input from the driver state detection unit 12041.

The microcomputer 12051 can calculate a control target value of the drive power generation device, the steering mechanism, or the braking device based on the internal and external information acquired by the external information detection unit 12030 and the internal information detection unit 12040, and can output a control command to the drive system control unit 12010. For example, the microcomputer 12051 can perform cooperative control to achieve functions of an advanced driver assistance system (ADAS) including collision avoidance or impact reduction of the vehicle, follow travel based on inter-vehicular distance, vehicle speed maintaining travel, warning for collision of the vehicle, warning for lane deviation of the vehicle, or the like.

The microcomputer 12051 can perform cooperative control for, for example, automated driving in which the vehicle travels autonomously independent from operation by the driver by controlling the drive power generation device, the steering mechanism, the braking device, and the like based on information on surroundings of the vehicle, which is acquired by the external information detection unit 12030 and the internal information detection unit 12040.

The microcomputer 12051 can output a control command to the body system control unit 12020 based on the external information acquired by the external information detection unit 12030. For example, the microcomputer 12051 can control the head lamp in accordance with the position of a preceding vehicle or oncoming vehicle sensed by the external information detection unit 12030, and can perform cooperative control to achieve dimming such as switching from high beam to low beam.

The voice-image output unit 12052 transmits an output signal of at least one of voice and image to an output device capable of visually or audibly giving notification of information to a person on board the vehicle or the outside. In the example of FIG. 20, an audio speaker 12061, a display unit 12062, and an instrument panel 12063 are exemplarily illustrated as the output device. The display unit 12062 may include, for example, at least one of an on-board display and a head-up display.

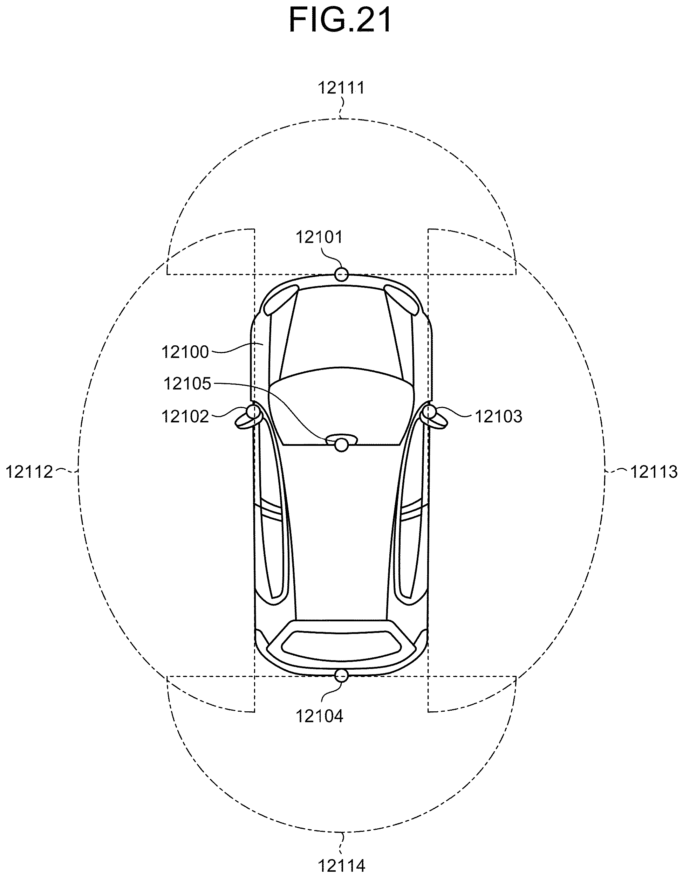

FIG. 21 is a diagram illustrating an exemplary installation position of the image capturing unit 12031.

In FIG. 21, a vehicle 12100 includes, as the image capturing unit 12031, image capturing units 12101, 12102, 12103, 12104, and 12105.

The image capturing units 12101, 12102, 12103, 12104, and 12105 are provided at positions, for example, the front nose, the side mirrors, the rear bumper, and the rear door of the vehicle 12100, an upper part of the front glass in the vehicle, and the like. The image capturing unit 12101 provided at the front nose and the image capturing unit 12105 provided at the upper part of the front glass in the vehicle mainly acquire images of the front side of the vehicle 12100. The image capturing units 12102 and 12103 provided at the side mirrors mainly acquire images of the sides of the vehicle 12100. The image capturing unit 12104 provided at the rear bumper or the rear door mainly acquires an image of the back side of the vehicle 12100. The front-side images acquired by the image capturing units 12101 and 12105 are mainly used to detect a preceding vehicle, a pedestrian, an obstacle, a traffic light, a traffic sign, a lane, or the like.

Note that FIG. 21 illustrates exemplary image capturing ranges of the image capturing units 12101 to 12104. An image capturing range 12111 indicates the image capturing range of the image capturing unit 12101 provided at the front nose, image capturing ranges 12112 and 12113 indicate the image capturing ranges of the image capturing units 12102 and 12103 provided at the respective side mirrors, and an image capturing range 12114 indicates the image capturing range of the image capturing unit 12104 provided at the rear bumper or the rear door. For example, image data captured by the image capturing units 12101 to 12104 can be placed together to obtain a panoramic image when the vehicle 12100 is viewed from above.

At least one of the image capturing units 12101 to 12104 may have a function of acquiring distance information. For example, at least one of the image capturing units 12101 to 12104 may be a stereo camera made of a plurality of image capturing elements or may be an image capturing element including pixels for phase difference detection.

For example, the microcomputer 12051 calculates the distance to each stereoscopic object in the image capturing ranges 12111 to 12114 and temporal change (speed relative to the vehicle 12100) of the distance based on distance information obtained from the image capturing units 12101 to 12104, thereby extracting, as a preceding vehicle, in particular, a stereoscopic object that is nearest on the traveling path of the vehicle 12100 and traveling at a predetermined speed (for example, equal to or higher than 0 km/h) in a direction substantially same as that of the vehicle 12100. In addition, the microcomputer 12051 sets an inter-vehicular distance to be ensured to a preceding vehicle in advance, thereby performing automatic brake control (including follow stop control), automatic acceleration control (including follow start control), and the like. In this manner, it is possible to perform cooperative control for, for example, automated driving in which the vehicle travels autonomously independent from operation by the driver.

For example, the microcomputer 12051 can classify, based on distance information obtained from the image capturing units 12101 to 12104, stereoscopic object data related to a stereoscopic object into a two-wheel vehicle, a standard-size vehicle, a large-size vehicle, a pedestrian, a utility pole, and other stereoscopic objects, extract the stereoscopic object data, and use the stereoscopic object data for obstacle automatic avoidance. For example, the microcomputer 12051 identifies an obstacle in surroundings of the vehicle 12100 as an obstacle that is visually recognizable by the driver of the vehicle 12100 or an obstacle difficult to be visually recognized. Then, the microcomputer 12051 determines a collision risk indicating a danger degree of collision with each obstacle, and in a situation in which the collision risk is equal to or larger than a set value and collision is likely to happen, the microcomputer 12051 can perform operation support for collision avoidance by outputting an alert to the driver through the audio speaker 12061 and the display unit 12062 or performing forced deceleration and avoidance steering through the drive system control unit 12010.

At least one of the image capturing units 12101 to 12104 may be an infrared camera configured to detect infrared. For example, the microcomputer 12051 can recognize a pedestrian by determining whether the pedestrian exists in images captured by the image capturing units 12101 to 12104. This pedestrian recognition is performed through, for example, a procedure of extracting feature points in images captured by the image capturing units 12101 to 12104 as infrared cameras, and a procedure of determining whether an object is a pedestrian by performing pattern matching processing on a series of feature points indicating the outline of the object. When the microcomputer 12051 determines that a pedestrian exists in the images captured by the image capturing units 12101 to 12104 and recognizes the pedestrian, the voice-image output unit 12052 controls the display unit 12062 to display the recognized pedestrian in superimposition with a rectangular outline line for enhancement. The voice-image output unit 12052 may control the display unit 12062 to display an icon or the like illustrating the pedestrian at a desired position.

The above description is made on an example of the vehicle control system to which the technology of the present disclosure is applicable. The technology of the present disclosure is applicable to the image capturing unit 12031 among the above-described components. Specifically, the solid-state image capturing device 100 according to the present disclosure is applicable to the image capturing unit 12031. When the technology of the present disclosure is applied to the image capturing unit 12031, it is possible to improve performance of the vehicle control system. For example, it is possible to obtain a high-definition captured image by using the solid-state image capturing device 10 having an enlarged dynamic range. Specifically, it is easy to recognize an object at a place having a large grayscale difference in image capturing inside and outside the vehicle. In addition, the solid-state image capturing device can perform fast operation, which leads to reduction of a time taken for operation from object sensing to vehicle control.

Note that effects described in the present specification are merely exemplary and not restrictive, but any other effect may be achieved.

### Reference Signs List

- 1: solid-state image capturing system

- 100: solid-state image capturing device
- 110: image capturing unit
- 120: image capturing processing unit
- 130: DNN processing unit
- 140: storage unit
- 150: evaluation unit
- 160: DNN control unit
- 170: selector
- 171: multiplexer
- 172: demultiplexer
- 180, 210: communication I/F
- 181, 212: transmission unit
- 182, 211: reception unit
- 190, 220: communication control unit
- 200: information processing device
- 230: control unit

## Claims

1. A solid-state image capturing device (100, 100A, 100-N) comprising:
a storage unit (140) configured to store a plurality of DNN models, wherein each DNN model stored in the storage unit (140) is distinguished by model information;
a DNN processing unit (130) configured to execute a DNN for an input image based on a DNN model stored in the storage unit (140);
an evaluation unit (150) configured to generate evaluation information by evaluating the result of the execution of the DNN; and
a DNN control unit (160) configured to receive, from an information processing device (200), control information generated based on evaluation information of a result of the execution of the DNN and change the DNN model based on the control information,
wherein the DNN control unit (160) is further configured to switch, based on the control information, the executed DNN model to another different DNN model stored in the storage unit (140) in a manner such that the DNN model stored in the storage unit (140) is used without newly producing a DNN model,
wherein the evaluation information includes the model information of the DNN model,
wherein the model information includes at least one of an input image size, a filter size, a filter value, a filter number, a stride number, a padding number, a bias value, the kind of an activation function, the accuracy of a DNN, the value of the loss function, a batch size, the kind of normalization, and a learning rate,
wherein the input image size means the size of image data for which a DNN is executed, as defined by the number of longitudinal pixels times the number of transverse pixels times a channel number, the channel number meaning the number of input images,
wherein the filter size is a filter applied to an input image and defined by the number of longitudinal pixels times the number of transverse pixels times the channel number the filter value being the weight of the filter automatically set by learning, and wherein the feature amount of the input image being extracted by applying the filter to the input image, wherein stride number means the moving amount of the filter when the filter is applied to the input image,
the padding number means the size of a region at an edge of a characteristic map after the filter is applied,
the bias value is a value input independently from the input image, and the bias value is automatically set by learning, wherein the kind of an activation function is one of an identity function, a sigmoid function, a soft max function, a step function, a ReLU function, or a Tanh function,
wherein the accuracy of a DNN is the accuracy of recognition of the input image as evaluated by the evaluation unit (150), the value of the loss function is a value calculated by the least square error or the cross entropy error,
the batch size means the data sampling number of learning data, and
the learning rate means the learning count of a DNN model.

2. The solid-state image capturing device (100, 100A, 100-N) according to claim 1, wherein the evaluation information further includes identification information of the DNN model, identification information of the solid-state image capturing device (100, 100A, 100-N), electric power consumption of each component, operation frequency of each component, a frame rate, and a number of classifications.

3. The solid-state image capturing device (100, 100A, 100-N) according to claim 1 or 2, wherein the control information further comprises information for change that is related to identification information of a DNN model, the identification information of the solid-state image capturing device (100, 100A, 100N), electric power consumption, operation frequency, frame rate, and a number of classifications.

4. The solid-state image capturing device (100, 100A, 100-N) according to any one of the preceding claims, wherein the DNN control unit (160) changes parameters of the DNN model based on the control information.

5. The solid-state image capturing device (100, 100A, 100-N) according to claim 4, wherein the DNN control unit changes (160) at least one of an input image size and a filter size of the DNN model.

6. The solid-state image capturing device (100, 100A, 100-N) according to any one of the preceding claims, wherein the storage unit (140) stores therein learning data for the DNN processing unit.

7. The solid-state image capturing device (100, 100A, 100-N) according to any one of the preceding claims, wherein the evaluation unit (150) generates the evaluation information by evaluating a processing situation of the DNN processing unit (130) at inference and learning, or generates correct-answer data based on a result of recognition of the DNN and the evaluation information.

8. The solid-state image capturing device (100, 100A, 100-N) according to claim 7, wherein the DNN control unit (160) changes the DNN model based on the correct-answer data.

9. The solid-state image capturing device (100, 100A, 100-N) according to any one of the preceding claims, wherein the evaluation information further includes information related to a result of recognition of the DNN.

10. An information processing device (200) suitable to be coupled to the solid-state image capturing device (100) according to any one of claims 1 to 9, the information processing device (200) comprising a control unit (230) configured to generate, based on the evaluation information provided by the evaluation unit (150) of the solid-state image capturing device (100), control information for changing the DNN model.

11. An information processing system (1, 1B, 1C) comprising:
a solid-state image capturing device (100) according to any one of claims 1 to 9; and
an information processing device (200),
the information processing device (200) comprising a control unit (230) configured to generate, based on a result of execution of the DNN model, control information for changing the DNN model.

12. An information processing method (100, 200) comprising:
storing a DNN model in a storage unit (140;
executing (S101) a DNN for an input image based on a DNN model; and
receiving control information (S105) generated based on evaluation information of a result of the execution of the DNN and changing the DNN model based on the control information;
generating evaluation information by evaluating the result of the execution of the DNN;
generating (S104), based on the generated evaluation information, control information for changing the DNN model,
the method further comprising:
acquiring information related to another DNN model, wherein each DNN model is distinguished by model information;
generating control information based on the other DNN model; and
switching, based on the control information, the executed DNN model to another different DNN model in a manner such that the DNN model stored in the storage unit (140) is used without newly producing a DNN model,
wherein the evaluation information includes the model information of the DNN model,
wherein the model information includes at least one of an input image size, a filter size, a filter value, a filter number, a stride number, a padding number, a bias value, the kind of an activation function, the accuracy of a DNN, the value of the loss function, a batch size, the kind of normalization, and a learning rate,
wherein the input image size means the size of image data for which a DNN is executed, as defined by the number of longitudinal pixels times the number of transverse pixels times a channel number, the channel number meaning the number of input images,
wherein the filter size is a filter applied to an input image and defined by the number of longitudinal pixels times the number of transverse pixels times the channel number the filter value being the weight of the filter automatically set by learning, and wherein the feature amount of the input image being extracted by applying the filter to the input image, wherein stride number means the moving amount of the filter when the filter is applied to the input image,
the padding number means the size of a region at an edge of a characteristic map after the filter is applied,
the bias value is a value input independently from the input image, and the bias value is automatically set by learning, wherein the kind of an activation function is one of an identity function, a sigmoid function, a soft max function, a step function, a ReLU function, or a Tanh function,
wherein the accuracy of a DNN is the accuracy of recognition of the input image as evaluated when generating the evaluation information,
the value of the loss function is a value calculated by the least square error or the cross entropy error,
the batch size means the data sampling number of learning data, and
the learning rate means the learning count of a DNN model.

## Patentansprüche

1. Festkörper-Bilderfassungsvorrichtung (100, 100A, 100-N), umfassend:
eine Speichereinheit (140), die konfiguriert ist, um eine Vielzahl von DNN-Modellen zu speichern, wobei jedes in der Speichereinheit (140) gespeicherte DNN-Modell durch Modellinformationen unterschieden wird;
eine DNN-Verarbeitungseinheit (130), die konfiguriert ist, um ein DNN für ein Eingangsbild basierend auf einem in der Speichereinheit (140) gespeicherten DNN-Modell auszuführen;
eine Bewertungseinheit (150), die konfiguriert ist, um Bewertungsinformationen durch Bewerten des Ergebnisses der Ausführung des DNN zu erzeugen; und
eine DNN-Steuereinheit (160), die konfiguriert ist, um von einer Informationsverarbeitungsvorrichtung (200) Steuerinformationen zu empfangen, die basierend auf Bewertungsinformationen eines Ergebnisses der Ausführung des DNN erzeugt werden, und das DNN-Modell basierend auf den Steuerinformationen zu ändern,
wobei die DNN-Steuereinheit (160) ferner konfiguriert ist, um basierend auf den Steuerinformationen das ausgeführte DNN-Modell auf ein anderes unterschiedliches DNN-Modell umzuschalten, das in der Speichereinheit (140) derart gespeichert ist, dass das in der Speichereinheit (140) gespeicherte DNN-Modell verwendet wird, ohne ein DNN-Modell neu zu erzeugen,
wobei die Bewertungsinformationen die Modellinformationen des DNN-Modells einschließen,
wobei die Modellinformationen mindestens eines von einer Eingangsbildgröße, einer Filtergröße, einem Filterwert, einer Filteranzahl, einer Schrittweitenanzahl, einer Auffüllungsanzahl, einem Biaswert, der Art einer Aktivierungsfunktion, der Genauigkeit eines DNN, dem Wert der Verlustfunktion, einer Stapelgröße, der Art der Normalisierung und einer Lernrate einschließen,
wobei die Eingangsbildgröße die Größe von Bilddaten bedeutet, für die ein DNN ausgeführt wird, wie definiert durch die Anzahl von Längspixeln mal die Anzahl von Querpixeln mal eine Kanalanzahl, wobei die Kanalanzahl die Anzahl von Eingangsbildern bedeutet,
wobei die Filtergröße ein auf ein Eingangsbild angewendeter Filter ist und durch die Anzahl der Längspixel mal die Anzahl der Querpixel mal die Kanalanzahl definiert ist, wobei der Filterwert das Gewicht des Filters ist, das automatisch durch Lernen eingestellt wird, und wobei die Merkmalmenge des Eingangsbilds durch Anwenden des Filters auf das Eingangsbild extrahiert wird,
wobei Schrittweitenanzahl die Bewegungsmenge des Filters bedeutet, wenn der Filter auf das Eingangsbild angewendet wird,
die Auffüllungsanzahl die Größe eines Bereichs an einem Rand einer charakteristischen Karte bedeutet, nachdem der Filter angewendet wird,
der Biaswert ein Wert ist, der unabhängig voneinander von dem Eingangsbild eingegeben wird, und der Bias-Wert automatisch durch Lernen eingestellt wird,
wobei die Art einer Aktivierungsfunktion eines von einer Identitätsfunktion, einer Sigmoidfunktion, einer Soft-Max-Funktion, einer Schrittfunktion, einer ReLU-Funktion oder einer Tanh-Funktion ist,
wobei die Genauigkeit eines DNN die Genauigkeit der Erkennung des Eingangsbilds ist, wie sie von der Bewertungseinheit (150) bewertet wird,
der Wert der Verlustfunktion ein Wert ist, der durch den kleinsten Quadratfehler oder den Kreuzentropiefehler berechnet wird,
die Stapelgröße die Datenstichprobenanzahl von Lerndaten bedeutet, und
die Lernrate die Lernanzahl eines DNN-Modells bedeutet.

2. Festkörper-Bilderfassungsvorrichtung (100, 100A, 100-N) nach Anspruch 1, wobei die Bewertungsinformationen ferner Identifikationsinformationen des DNN-Modells, Identifikationsinformationen der Festkörper-Bilderfassungsvorrichtung (100, 100A, 100-N), Energiebedarf jeder Komponente, Betriebsfrequenz jeder Komponente, eine Bildrate und eine Anzahl von Klassifikationen einschließen.

3. Festkörper-Bilderfassungsvorrichtung (100, 100A, 100-N) nach Anspruch 1 oder 2, wobei die Steuerinformationen ferner Informationen für eine Änderung umfassen, die sich auf Identifikationsinformationen eines DNN-Modells, die Identifikationsinformationen der Festkörper-Bilderfassungsvorrichtung (100, 100A, 100N), Energiebedarf, Betriebsfrequenz, Bildrate und eine Anzahl von Klassifikationen beziehen.

4. Festkörper-Bilderfassungsvorrichtung (100, 100A, 100-N) nach einem der vorstehenden Ansprüche, wobei die DNN-Steuereinheit (160) Parameter des DNN-Modells basierend auf den Steuerinformationen ändert.

5. Festkörper-Bilderfassungsvorrichtung (100, 100A, 100-N) nach Anspruch 4, wobei die DNN-Steuereinheit (160) mindestens eines von einer Eingangsbildgröße und einer Filtergröße des DNN-Modells ändert.

6. Festkörper-Bilderfassungsvorrichtung (100, 100A, 100-N) nach einem der vorstehenden Ansprüche, wobei die Speichereinheit (140) darin Lerndaten für die DNN-Verarbeitungseinheit speichert.

7. Festkörper-Bilderfassungsvorrichtung (100, 100A, 100-N) nach einem der vorstehenden Ansprüche, wobei die Bewertungseinheit (150) die Bewertungsinformationen durch Bewerten einer Verarbeitungssituation der **DNN-**Verarbeitungseinheit (130) bei Inferenz und Lernen erzeugt oder Richtige-Antwort-Daten basierend auf einem Ergebnis der Erkennung des **DNN** und den Bewertungsinformationen erzeugt.

8. Festkörper-Bilderfassungsvorrichtung (100, 100A, 100-N) nach Anspruch 7, wobei die DNN-Steuereinheit (160) das DNN-Modell basierend auf den Richtige-Antwort-Daten ändert.

9. Festkörper-Bilderfassungsvorrichtung (100, 100A, 100-N) nach einem der vorstehenden Ansprüche, wobei die Bewertungsinformationen ferner Informationen in Bezug auf ein Ergebnis einer Erkennung des DNN einschließen.

10. Informationsverarbeitungsvorrichtung (200), die geeignet ist, an die Festkörper-Bilderfassungsvorrichtung (100) nach einem der Ansprüche 1 bis 9 gekoppelt zu werden, wobei die Informationsverarbeitungsvorrichtung (200) eine Steuereinheit (230) umfasst, die konfiguriert ist, um, basierend auf den Bewertungsinformationen, die von der Bewertungseinheit (150) der Festkörper-Bilderfassungsvorrichtung (100) bereitgestellt werden, Steuerinformationen zum Ändern des DNN-Modells zu erzeugen.

11. Informationsverarbeitungssystem (1, 1B, 1C), umfassend:
eine Festkörper-Bilderfassungsvorrichtung (100) nach einem der Ansprüche 1 bis 9; und
eine Informationsverarbeitungsvorrichtung (200),
die Informationsverarbeitungsvorrichtung (200) umfassend eine Steuereinheit (230), die konfiguriert ist, um basierend auf einem Ergebnis der Ausführung des DNN-Modells Steuerinformationen zum Ändern des DNN-Modells zu erzeugen.

12. Informationsverarbeitungsverfahren (100, 200), umfassend:
Speichern eines DNN-Modells in einer Speichereinheit (140);
Ausführen (S101) eines DNN für ein Eingangsbild basierend auf einem DNN-Modell; und
Empfangen von Steuerinformationen (S105), die basierend auf Bewertungsinformationen eines Ergebnisses der Ausführung des DNN erzeugt werden, und Ändern des DNN-Modells basierend auf den Steuerinformationen;
Erzeugen von Bewertungsinformationen durch Bewerten des Ergebnisses der Ausführung des DNN;
Erzeugen (S104), basierend auf den erzeugten Bewertungsinformationen, von Steuerinformationen zum Ändern des DNN-Modells,
wobei das Verfahren ferner umfasst:
Erfassen von Informationen bezüglich eines anderen DNN-Modells, wobei jedes DNN-Modell durch Modellinformationen unterschieden wird;
Erzeugen von Steuerinformationen basierend auf dem anderen DNN-Modell; und
Umschalten, basierend auf den Steuerinformationen, des ausgeführten DNN-Modells auf ein anderes unterschiedliches DNN-Modell in einer Weise, dass das in der Speichereinheit (140) gespeicherte DNN-Modell verwendet wird, ohne ein DNN-Modell neu zu erzeugen,
wobei die Bewertungsinformationen die Modellinformationen des DNN-Modells einschließen,
wobei die Modellinformationen mindestens eines von einer Eingangsbildgröße, einer Filtergröße, einem Filterwert, einer Filteranzahl, einer Schrittweitenanzahl, einer Auffüllungsanzahl, einem Biaswert, der Art einer Aktivierungsfunktion, der Genauigkeit eines DNN, dem Wert der Verlustfunktion, einer Stapelgröße, der Art der Normalisierung und einer Lernrate einschließen,
wobei die Eingangsbildgröße die Größe von Bilddaten bedeutet, für die ein DNN ausgeführt wird, wie definiert durch die Anzahl von Längspixeln mal die Anzahl von Querpixeln mal eine Kanalanzahl, wobei die Kanalanzahl die Anzahl von Eingangsbildern bedeutet,
wobei die Filtergröße ein auf ein Eingangsbild angewendeter Filter ist und durch die Anzahl der Längspixel mal die Anzahl der Querpixel mal die Kanalanzahl definiert ist, wobei der Filterwert das Gewicht des Filters ist, das automatisch durch Lernen eingestellt wird, und wobei die Merkmalmenge des Eingangsbilds durch Anwenden des Filters auf das Eingangsbild extrahiert wird,
wobei Schrittweitenanzahl die Bewegungsmenge des Filters bedeutet, wenn der Filter auf das Eingangsbild angewendet wird,
die Auffüllungsanzahl die Größe eines Bereichs an einem Rand einer charakteristischen Karte bedeutet, nachdem der Filter angewendet wird,
der Biaswert ein Wert ist, der unabhängig voneinander von dem Eingangsbild eingegeben wird, und der Bias-Wert automatisch durch Lernen eingestellt wird,
wobei die Art einer Aktivierungsfunktion eines von einer Identitätsfunktion, einer Sigmoidfunktion, einer Soft-Max-Funktion, einer Schrittfunktion, einer ReLU-Funktion oder einer Tanh-Funktion ist,
wobei die Genauigkeit eines DNN die Genauigkeit der Erkennung des Eingangsbilds ist, wie sie bei der Erzeugung der Bewertungsinformationen bewertet wird,
der Wert der Verlustfunktion ein Wert ist, der durch den kleinsten Quadratfehler oder den Kreuzentropiefehler berechnet wird,
die Stapelgröße die Datenstichprobenanzahl von Lerndaten bedeutet, und
die Lernrate die Lernanzahl eines DNN-Modells bedeutet.

## Revendications

1. Dispositif de capture d'image à semi-conducteurs (100, 100A, 100-N) comprenant :
une unité de stockage (140) configurée pour stocker une pluralité de modèles DNN, dans lequel chaque modèle DNN stocké dans l'unité de stockage (140) se distingue par des informations de modèle ;
une unité de traitement DNN (130) configurée pour exécuter un DNN pour une image d'entrée sur la base d'un modèle DNN stocké dans l'unité de stockage (140) ;
une unité d'évaluation (150) configurée pour générer des informations d'évaluation en évaluant le résultat de l'exécution du DNN ; et
une unité de commande DNN (160) configurée pour recevoir, depuis un dispositif de traitement d'informations (200), des informations de commande générées sur la base d'informations d'évaluation d'un résultat de l'exécution du DNN et modifier le modèle DNN sur la base des informations de commande,
dans lequel l'unité de commande DNN (160) est en outre configurée pour commuter, sur la base des informations de commande, le modèle DNN exécuté vers un autre modèle DNN différent stocké dans l'unité de stockage (140) d'une manière à ce que le modèle DNN stocké dans l'unité de stockage (140) soit utilisé sans produire nouvellement un modèle DNN,
dans lequel les informations d'évaluation comportent les informations de modèle du modèle DNN,
dans lequel les informations de modèle comportent au moins l'un parmi une taille d'image d'entrée, une taille de filtre, une valeur de filtre, un numéro de filtre, un nombre de foulée, un nombre de remplissage, une valeur de polarisation, le type d'une fonction d'activation, la précision d'un DNN, la valeur de la fonction de perte, une taille de lot, le type de normalisation, et un taux d'apprentissage,
dans lequel la taille d'image d'entrée désigne la taille des données d'image pour lesquelles un DNN est exécuté, telle que définie par le nombre de pixels longitudinaux multiplié par le nombre de pixels transversaux multiplié par un numéro de canal, le numéro de canal signifiant le nombre d'images d'entrée,
dans lequel la taille de filtre est un filtre appliqué à une image d'entrée et défini par le nombre de pixels longitudinaux multiplié par le nombre de pixels transversaux multiplié par le numéro de canal, la valeur de filtre étant le poids du filtre défini automatiquement par apprentissage, et dans lequel la quantité caractéristique de l'image d'entrée est extraite en appliquant le filtre à l'image d'entrée,
dans lequel le nombre de foulée désigne la quantité de déplacement du filtre lorsque le filtre est appliqué à l'image d'entrée,
le nombre de remplissage désigne la taille d'une région au niveau d'un bord d'une carte caractéristique après l'application du filtre,
la valeur de polarisation est une valeur entrée indépendamment de l'image d'entrée, et la valeur de polarisation est automatiquement définie par apprentissage,
dans lequel le type de fonction d'activation est l'une parmi une fonction d'identité, une fonction sigmoïde, une fonction softmax, une fonction pas, une fonction ReLU ou une fonction Tanh,
dans lequel la précision d'un DNN est la précision de reconnaissance de l'image d'entrée telle qu'évaluée par l'unité d'évaluation (150),
la valeur de la fonction de perte est une valeur calculée par l'erreur des moindres carrés ou l'erreur d'entropie croisée,
la taille de lot désigne le nombre d'échantillons de données des données d'apprentissage, et
le taux d'apprentissage désigne le nombre d'apprentissage d'un modèle DNN.

2. Dispositif de capture d'image à semi-conducteurs (100, 100A, 100-N) selon la revendication 1, dans lequel les informations d'évaluation comportent en outre des informations d'identification du modèle DNN, des informations d'identification du dispositif de capture d'image à semi-conducteurs (100, 100A, 100-N), une consommation d'énergie électrique de chaque composant, une fréquence de fonctionnement de chaque composant, une fréquence de trames et un nombre de classifications.

3. Dispositif de capture d'image à semi-conducteurs (100, 100A, 100-N) selon la revendication 1 ou 2, dans lequel les informations de commande comprennent en outre des informations pour modification qui sont relatives à des informations d'identification d'un modèle DNN, des informations d'identification du dispositif de capture d'image à semi-conducteurs (100, 100A, 100N), une consommation d'énergie électrique, une fréquence de fonctionnement, une fréquence de trames et un certain nombre de classifications.

4. Dispositif de capture d'image à semi-conducteurs (100, 100A, 100-N) selon l'une quelconque des revendications précédentes, dans lequel l'unité de commande DNN (160) modifie des paramètres du modèle DNN sur la base des informations de commande.

5. Dispositif de capture d'image à semi-conducteurs (100, 100A, 100-N) selon la revendication 4, dans lequel l'unité de commande DNN modifie (160) au moins l'une parmi une taille d'image d'entrée et une taille de filtre du modèle DNN.

6. Dispositif de capture d'image à semi-conducteurs (100, 100A, 100-N) selon l'une quelconque des revendications précédentes, dans lequel l'unité de stockage (140) y stocke des données d'apprentissage pour l'unité de traitement DNN.

7. Dispositif de capture d'image à semi-conducteurs (100, 100A, 100-N) selon l'une quelconque des revendications précédentes, dans lequel l'unité d'évaluation (150) génère les informations d'évaluation en évaluant une situation de traitement de l'unité de traitement DNN (130) au niveau de l'inférence et de l'apprentissage, ou génère des données de réponse correcte sur la base d'un résultat de reconnaissance du DNN et des informations d'évaluation.

8. Dispositif de capture d'image à semi-conducteurs (100, 100A, 100-N) selon la revendication 7, dans lequel l'unité de commande DNN (160) modifie le modèle DNN sur la base des données de réponse correcte.

9. Dispositif de capture d'image à semi-conducteurs (100, 100A, 100-N) selon l'une quelconque des revendications précédentes, dans lequel les informations d'évaluation comportent en outre des informations relatives à un résultat de reconnaissance du DNN.

10. Dispositif de traitement d'informations (200) approprié pour être couplé au dispositif de capture d'image à semi-conducteurs (100) selon l'une quelconque des revendications 1 à 9, le dispositif de traitement d'informations (200) comprenant une unité de commande (230) configurée pour générer, sur la base des informations d'évaluation fournies par l'unité d'évaluation (150) du dispositif de capture d'image à semi-conducteurs (100), des informations de commande pour modifier le modèle DNN.

11. Système de traitement d'informations (1, 1B, 1C) comprenant :
un dispositif d'imagerie à semi-conducteurs (100) selon l'une quelconque des revendications 1 à 9 ; et
un dispositif de traitement d'informations (200),
le dispositif de traitement d'informations (200) comprenant une unité de commande (230) configurée pour générer, sur la base d'un résultat d'exécution du modèle DNN, des informations de commande pour modifier le modèle DNN.

12. Procédé de traitement d'informations (100, 200) comprenant :
le stockage d'un modèle DNN dans une unité de stockage (140 ;
l'exécution (S101) d'un DNN pour une image d'entrée sur la base d'un modèle DNN ; et
la réception d'informations de commande (S105) générées sur la base d'informations d'évaluation d'un résultat de l'exécution du DNN et la modification du modèle DNN sur la base des informations de commande ;
la génération d'informations d'évaluation en évaluant le résultat de l'exécution du DNN ;
la génération (S104), sur la base des informations d'évaluation générées, d'informations de commande pour modifier le modèle DNN,
le procédé comprenant en outre :
l'acquisition d'informations relatives à un autre modèle DNN, dans lequel chaque modèle DNN est distingué par des informations de modèle ;
la génération d'informations de commande sur la base de l'autre modèle DNN ; et
la commutation, sur la base des informations de commande, du modèle DNN exécuté vers un autre modèle DNN différent dvune manière à ce que le modèle DNN stocké dans l'unité de stockage (140) soit utilisé sans produire nouvellement un modèle DNN,
dans lequel les informations d'évaluation comportent les informations de modèle du modèle DNN,
dans lequel les informations de modèle comportent au moins l'un parmi une taille d'image d'entrée, une taille de filtre, une valeur de filtre, un numéro de filtre, un nombre de foulée, un nombre de remplissage, une valeur de biais, le type d'une fonction d'activation, la précision d'un DNN, la valeur de la fonction de perte, une taille de lot, le type de normalisation, et un taux d'apprentissage,
dans lequel la taille d'image d'entrée désigne la taille des données d'image pour lesquelles un DNN est exécuté, telle que définie par le nombre de pixels longitudinaux multiplié par le nombre de pixels transversaux multiplié par un numéro de canal, le numéro de canal signifiant le nombre d'images d'entrée,
dans lequel la taille de filtre est un filtre appliqué à une image d'entrée et défini par le nombre de pixels longitudinaux multiplié par le nombre de pixels transversaux multiplié par le numéro de canal, la valeur de filtre étant le poids du filtre défini automatiquement par apprentissage, et dans lequel la quantité caractéristique de l'image d'entrée est extraite en appliquant le filtre à l'image d'entrée,
dans lequel le nombre de foulée désigne la quantité mobile du filtre lorsque le filtre est appliqué à l'image d'entrée,
le nombre de remplissage désigne la taille d'une région au niveau d'un bord d'une carte caractéristique après l'application du filtre,
la valeur de polarisation est une valeur entrée indépendamment de l'image d'entrée, et la valeur de polarisation est automatiquement définie par apprentissage,
dans lequel le type de fonction d'activation est l'une parmi une fonction d'identité, une fonction sigmoïde, une fonction softmax, une fonction pas, une fonction ReLU ou une fonction Tanh,
dans lequel la précision d'un DNN est la précision de reconnaissance de l'image d'entrée telle qu'évaluée lors de la génération des informations d'évaluation,
la valeur de la fonction de perte est une valeur calculée par l'erreur des moindres carrés ou l'erreur d'entropie croisée,
la taille de lot désigne le nombre d'échantillons de données de données d'apprentissage, et
le taux d'apprentissage désigne le nombre d'apprentissage d'un modèle DNN.
